# EUROPEAN PATENT APPLICATION

(11) **EP 4 131 032 A1**
(43) Date of publication of application: **08.02.2023**
(21) Application number: 21796457.6
(22) Date of filing: 25.04.2021
(51) Int. Cl.: G06F 16/9537

(54) **REMINDING METHOD AND RELATED APPARATUS**

(30) Priority: 27.04.2020 CN 202010345955
(71) Applicant: Huawei Technologies Co., Ltd., Shenzhen, Guangdong 518129 (CN)
(72) Inventor: ZHOU, Wenyu, Shenzhen, Guangdong 518129 (CN)
(74) Representative: Huawei European IPR
(86) International application number: PCT/CN2021/089535
(87) International publication number: WO 2021/218837

(57) **Abstract**

This application discloses a reminding method, including: receiving a first opening operation; opening a reminder application in response to the first opening operation; setting one or more reminders in the reminder application; receiving a second opening operation; opening a map application in response to the second opening operation; receiving, in the map application, an input destination; obtaining a first reminder that is associated with the destination and that is in the reminder application, where the first reminder belongs to the one or more reminders; and triggering a reminder for the first reminder. In this way, a reminder occasion for memo information/a reminder may be accurately grasped.

## Description

This application claims priority to Chinese Patent Application No. 202010345955.6, filed with the China National Intellectual Property Administration on April 27, 2020 and entitled "REMINDING METHOD AND RELATED APPARATUS", which is incorporated herein by reference in its entirety.

### TECHNICAL FIELD

This application relates to the field of information technologies, and in particular, to a reminding method and a related apparatus.

### BACKGROUND

Currently, electronic devices such as a smartphone can implement a memo reminder function, and a user may record, in a memo application of the electronic device, a to-do item that needs to be reminded. The user may record, in the memo application, the to-do item that needs to be reminded, reminder time, a repetition period, and the like. The electronic device may remind the user of the to-do item based on the reminder time recorded in the memo. For example, the user may set, in the memo application, the to-do item to "Send the package", and reminder time may be "4 o'clock this afternoon".

An existing memo application on the electronic device may also receive a to-do item that is entered by the user and that is based on a geographical location. When the electronic device detects that the user arrives at a specified location, the electronic device may remind the user of the to-do item corresponding to the location in the memo. For example, the user may set, in the memo application of the electronic device, the to-do item to "Collect the package", and a reminder location may be "Arrive at home". Alternatively, the to-do item may be "Dressing clothes", and a reminder location may be "Leave home".

However, reminder time or a location cannot be set in advance for many to-do items that the user needs to be reminded and that are recorded by the user. For example, if an item that the user needs to be reminded is "Take your membership card when you go to the zoo", because the user does not know time at which the user will go to the zoo in the future, and does not know a location at which the user will go to the zoo in the future, the user cannot be reminded. Consequently, in the conventional technology, the electronic device cannot remind a reminder that has no reminder time or reminder location.

### SUMMARY

This application provides a reminding method and a related apparatus. When a user will go to a location at a future time point, the user may be reminded of memo information/a reminder that is associated with an address name and that is in a reminder application such as a memo application. In this way, an electronic device can accurately grasp a reminder occasion for the memo information/the reminder.

According to a first aspect, this application provides a reminding method, including: receiving a first opening operation; opening a reminder application in response to the first opening operation, where one or more reminders are set in the reminder application; receiving a second opening operation; opening a map application in response to the second opening operation; receiving, in the map application, an input destination; obtaining a first reminder that is associated with the destination and that is in the reminder application, where the first reminder belongs to the one or more reminders; and triggering a reminder for the first reminder.

With reference to the first aspect, in some embodiments, an occasion for triggering a reminder for the first reminder may include but is not limited to the following several policies:
1. Receive, in a search input box of the map application, the input destination. Trigger the reminder for the first reminder in response to receiving, in the search input box of the map application, the input destination.
2. Receive a search operation after an input destination is received in the map application. Display location information of the destination in response to the search operation. Trigger the reminder for the first reminder in response to the search operation.
3. Receive a navigation operation after an input destination is received in the map application. In response to the navigation operation, set the destination as a navigation end point and enable navigation. Trigger the reminder for the first reminder in response to the navigation operation.

With reference to the first aspect, in some embodiments, a reminder type of the first reminder may include but is not limited to the following several policies:
1. Display a first memo control. Receive a first input for the first memo control. Display the first reminder.
2. Display a reminder box, where the reminder box includes the first reminder.
3. Receive a second input for the search input box before an input destination is received in the map application. In response to the second input, start an input method application and display an input method input area. Display a second memo control in the input method input area in response to receiving, in the search input box of the map application, the input destination. Receive a third input for the second memo control. Display the first reminder in response to the third input.
4. Establish a Bluetooth connection to an in-vehicle infotainment device before the reminder for the first reminder is triggered. After the first reminder that is associated with the destination and that is in the reminder application is obtained, send a reminder request and the first reminder to the in-vehicle infotainment device. The reminder request is used to request the in-vehicle infotainment device to output the first reminder.

In a possible implementation, the method further includes: setting, in the reminder application, a reminder condition corresponding to the first reminder, where the reminder condition includes the destination associated with the first reminder; obtaining the reminder condition corresponding to the first reminder; obtaining, based on the reminder condition, the first reminder that is associated with the destination and that is in the reminder application; and
triggering the reminder for the first reminder when the reminder condition is met.

In a possible implementation, the obtaining a first reminder that is associated with the destination and that is in the reminder application specifically includes: detecting a keyword in the one or more reminders; and determining the first reminder from the one or more reminders based on the keyword in the one or more reminders, where a keyword of the first reminder includes the destination.

According to a second aspect, this application provides an electronic device, including one or more processors, a display, and one or more memories. The display and the one or more memories are coupled to the one or more processors. The one or more memories are configured to store computer program code. The computer program code includes computer instructions. When the one or more processors execute the computer instructions, the electronic device is enabled to: receive a first opening operation; open a reminder application in response to the first opening operation; set one or more reminders in the reminder application; receive a second opening operation; open a map application in response to the second opening operation; receive, in the map application, an input destination; obtain a first reminder that is associated with the destination and that is in the reminder application, where the first reminder belongs to the one or more reminders; and trigger a reminder for the first reminder.

With reference to the second aspect, in some embodiments, an occasion for triggering a reminder for the first reminder may include but is not limited to the following several policies:
1. Receive, in a search input box of the map application, the input destination. Trigger the reminder for the first reminder in response to receiving, in the search input box of the map application, the input destination.
2. Receive a search operation after an input destination is received in the map application. Display location information of the destination in response to the search operation. Trigger the reminder for the first reminder in response to the search operation.
3. Receive a navigation operation after an input destination is received in the map application. In response to the navigation operation, set the destination as a navigation end point and enable navigation. Trigger the reminder for the first reminder in response to the navigation operation.

With reference to the second aspect, in some embodiments, a reminder type of the first reminder may include but is not limited to the following several policies:
1. Display a first memo control. Receive a first input for the first memo control. Display the first reminder.
2. Display a reminder box, where the reminder box includes the first reminder.
3. Receive a second input for the search input box before an input destination is received in the map application. In response to the second input, start an input method application and display an input method input area. Display a second memo control in the input method input area in response to receiving, in the search input box of the map application, the input destination. Receive a third input for the second memo control. Display the first reminder in response to the third input.
4. Establish a Bluetooth connection to an in-vehicle infotainment device before the reminder for the first reminder is triggered. After the first reminder that is associated with the destination and that is in the reminder application is obtained, send a reminder request and the first reminder to the in-vehicle infotainment device. The reminder request is used to request the in-vehicle infotainment device to output the first reminder.

In a possible implementation, the method further includes: setting, in the reminder application, a reminder condition corresponding to the first reminder, where the reminder condition includes the destination associated with the first reminder; obtaining the reminder condition corresponding to the first reminder; obtaining, based on the reminder condition, the first reminder that is associated with the destination and that is in the reminder application; and
triggering the reminder for the first reminder when the reminder condition is met.

In a possible implementation, the obtaining a first reminder that is associated with the destination and that is in the reminder application specifically includes: detecting a keyword in the one or more reminders; and determining the first reminder from the one or more reminders based on the keyword in the one or more reminders, where a keyword of the first reminder includes the destination.

According to a third aspect, an embodiment of this application provides a computer storage medium, including computer instructions. When the computer instructions are run on an electronic device, a communication apparatus is enabled to perform the reminding method according to any possible implementation of any one of the foregoing aspects.

According to a fourth aspect, an embodiment of this application provides a computer program product. When the computer program product is run on a computer, the computer is enabled to perform the reminding method according to any possible implementation of any one of the foregoing aspects.

According to a fifth aspect, this application provides an electronic device, including one or more functional units. The one or more functional units are configured to: receive a first opening operation; open a reminder application in response to the first opening operation; set one or more reminders in the reminder application; receive a second opening operation; open a map application in response to the second opening operation; receive, in the map application, an input destination; obtain a first reminder that is associated with the destination and that is in the reminder application, where the first reminder belongs to the one or more reminders; and trigger a reminder for the first reminder.

With reference to the fifth aspect, in some embodiments, an occasion for triggering a reminder for the first reminder may include but is not limited to the following several policies:
1. Receive, in a search input box of the map application, the input destination. Trigger the reminder for the first reminder in response to receiving, in the search input box of the map application, the input destination.
2. Receive a search operation after an input destination is received in the map application. Display location information of the destination in response to the search operation. Trigger the reminder for the first reminder in response to the search operation.
3. Receive a navigation operation after an input destination is received in the map application. In response to the navigation operation, set the destination as a navigation end point and enable navigation. Trigger the reminder for the first reminder in response to the navigation operation.

With reference to the fifth aspect, in some embodiments, a reminder type of the first reminder may include but is not limited to the following several policies:
1. Display a first memo control. Receive a first input for the first memo control. Display the first reminder.
2. Display a reminder box, where the reminder box includes the first reminder.
3. Receive a second input for the search input box before an input destination is received in the map application. In response to the second input, start an input method application and display an input method input area. Display a second memo control in the input method input area in response to receiving, in the search input box of the map application, the input destination. Receive a third input for the second memo control. Display the first reminder in response to the third input.
4. Establish a Bluetooth connection to an in-vehicle infotainment device before the reminder for the first reminder is triggered. After the first reminder that is associated with the destination and that is in the reminder application is obtained, send a reminder request and the first reminder to the in-vehicle infotainment device. The reminder request is used to request the in-vehicle infotainment device to output the first reminder.

In a possible implementation, the method further includes: setting, in the reminder application, a reminder condition corresponding to the first reminder, where the reminder condition includes the destination associated with the first reminder; obtaining the reminder condition corresponding to the first reminder; obtaining, based on the reminder condition, the first reminder that is associated with the destination and that is in the reminder application; and
triggering the reminder for the first reminder when the reminder condition is met.

In a possible implementation, the obtaining a first reminder that is associated with the destination and that is in the reminder application specifically includes: detecting a keyword in the one or more reminders; and determining the first reminder from the one or more reminders based on the keyword in the one or more reminders, where a keyword of the first reminder includes the destination.

According to this application, when it is detected that a user is about to a location corresponding to an address name at a future time point, the electronic device may check memo information/a to-do item that is associated with the address name and that is in a reminder application such as a memo application, and remind the user of the memo information/the to-do item associated with the address name. In this way, when the user needs to go to the location in the future, the memo information/the to-do item associated with the location may be output to the user. The electronic device may accurately grasp a reminder occasion for the memo information/the to-do item.

### BRIEF DESCRIPTION OF DRAWINGS

FIG. 1 is a schematic diagram of a structure of an electronic device according to an embodiment of this application;
FIG. 2A to FIG. 2K are schematic diagrams of a group of interfaces according to an embodiment of this application;
FIG. 3A to FIG. 3E are schematic diagrams of another group of interfaces according to an embodiment of this application;
FIG. 4A to FIG. 4C are schematic diagrams of another group of interfaces according to an embodiment of this application;
FIG. 5A to FIG. 5C are schematic diagrams of another group of interfaces according to an embodiment of this application;
FIG. 6A to FIG. 6E are schematic diagrams of another group of interfaces according to an embodiment of this application;
FIG. 7A to FIG. 7D are schematic diagrams of another group of interfaces according to an embodiment of this application;
FIG. 8A to FIG. 8D are schematic diagrams of another group of interfaces according to an embodiment of this application;
FIG. 9A to FIG. 9G are schematic diagrams of another group of interfaces according to an embodiment of this application;
FIG. 10A to FIG. 10C are schematic diagrams of another group of interfaces according to an embodiment of this application; and
FIG. 11 is a schematic flowchart of a reminding method according to an embodiment of this application.

### DESCRIPTION OF EMBODIMENTS

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an implication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

An embodiment of this application provides a reminding method. When it is detected that a user is about to a location corresponding to an address name at a future time point, an electronic device may check memo information/a to-do item associated with the address name in a reminder application such as a memo application, and remind the user of the memo information/the to-do item associated with the address name. In this way, when the user needs to go to the location in the future, the memo information/the to-do item associated with the location may be output to the user. The electronic device may accurately grasp a reminder occasion for the memo information/the to-do item.

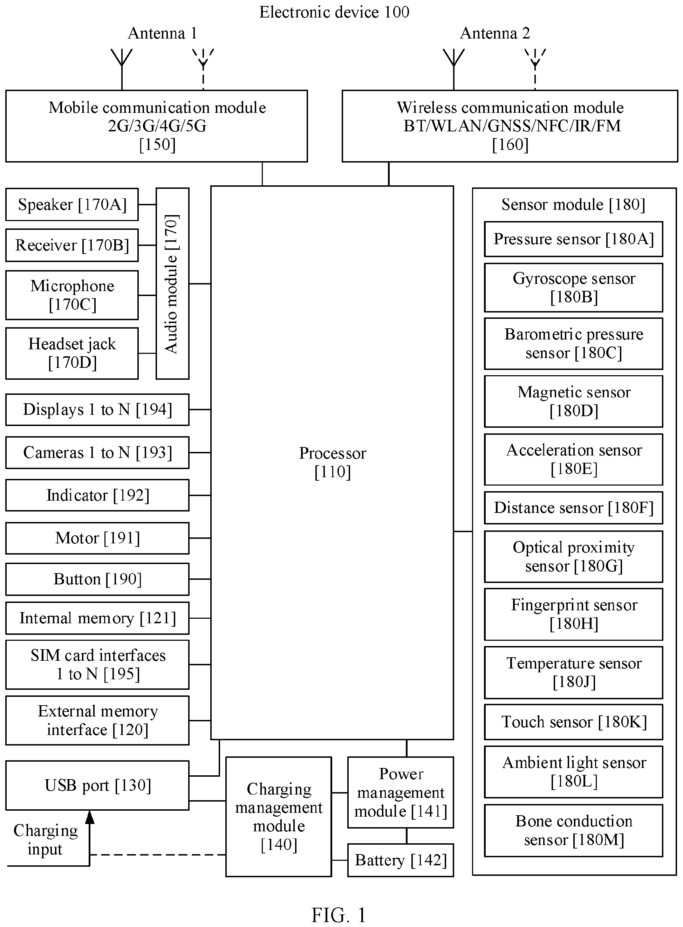

FIG. 1 is a schematic diagram of a structure of an electronic device 100.

The electronic device 100 is used as an example below to describe this embodiment in detail. It should be understood that the electronic device 100 shown in FIG. 1 is merely an example, and the electronic device 100 may have more or fewer components than those shown in FIG. 1, or two or more components may be combined, or different component configurations may be used. Components shown in the figure may be implemented by hardware, software, or a combination of hardware and software that includes one or more signal processing and/or application-specific integrated circuits.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3 G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TDCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) processing unit. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data and an address book) created in a process of using the electronic device 100, and the like. In addition, the internal memory 121 may include a high-speed random access memory, or may include a nonvolatile memory, for example, at least one magnetic disk storage device, a flash memory device, or a universal flash storage (universal flash storage, UFS).

The electronic device 100 may implement audio functions such as music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received by using the electronic device 100, the receiver 170B may be put close to a human ear to receive a voice.

The microphone 170C, also referred to as a "mike" or a "mic", is configured to convert a sound signal into an electrical signal. When making a call or sending voice information, a user may make a sound near the microphone 170C through the mouth, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, recognize a sound source, implement a directional recording function, and the like.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on a change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. The barometric pressure sensor 180C is configured to measure barometric pressure. The magnetic sensor 180D includes a Hall effect sensor. The acceleration sensor 180E may detect accelerations in various directions (usually on three axes) of the electronic device 100. When the electronic device 100 is still, a magnitude and a direction of gravity may be detected. The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The temperature sensor 180J is configured to detect a temperature. The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194. The bone conduction sensor 180M may obtain a vibration signal. The button 190 includes a power button, a volume button, and the like. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card.

The following specifically describes, with reference to an application scenario, a reminding method provided in an embodiment of this application.

In some application scenarios, when a user searches for an address of a location through a map application, the electronic device 100 may provide a reminder function associated with the location. The user may set a to-do item and a reminder type in the reminder function associated with the location. The reminder type may be as follows: The electronic device uses the address of the location as a navigation destination, the electronic device 100 sets the address of the location as a navigation destination after a time period, the electronic device 100 sets the location as a navigation destination and connects to an in-vehicle Bluetooth device, the electronic device 100 detects that the user drives to the location, or the like. In this way, the to-do item is associated with a geographical location in the map application, so that the to-do item can be output to the user when the user needs to go to the address next time, which improves accuracy of a reminder occasion.

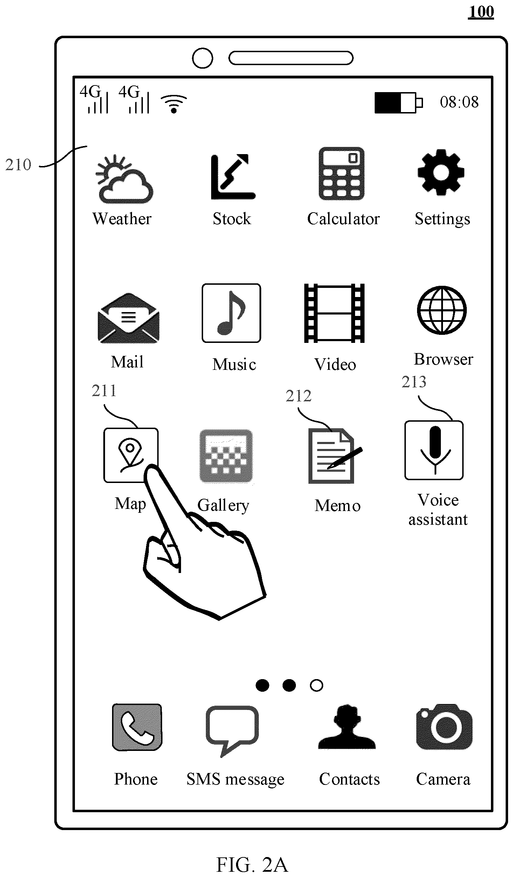

For example, as shown in FIG. 2A, the electronic device 100 may display an interface 210 of a home screen (home screen). The interface 210 displays a page on which application icons are disposed, and the page includes a plurality of application icons (for example, a weather application icon, a stock application icon, a calculator application icon, a settings application icon, an email application icon, a music application icon, a video application icon, a browser application icon, a map application icon 211, a gallery application icon, a memo application icon 212, and a voice assistant application icon 213). Optionally, a page indicator is further displayed below the plurality of application icons, to indicate a total quantity of pages on the home screen and a position relationship between a currently displayed page and another page. For example, the interface 210 of the home screen may include three pages, and a white dot in the page indicator may indicate that the currently displayed page is a rightmost page in the three pages. Further optionally, there are a plurality of tray icons (for example, a phone application icon, an SMS message application icon, a contacts application icon, and a camera application icon) below the page indicator, and the tray icons remain displayed during page switching.

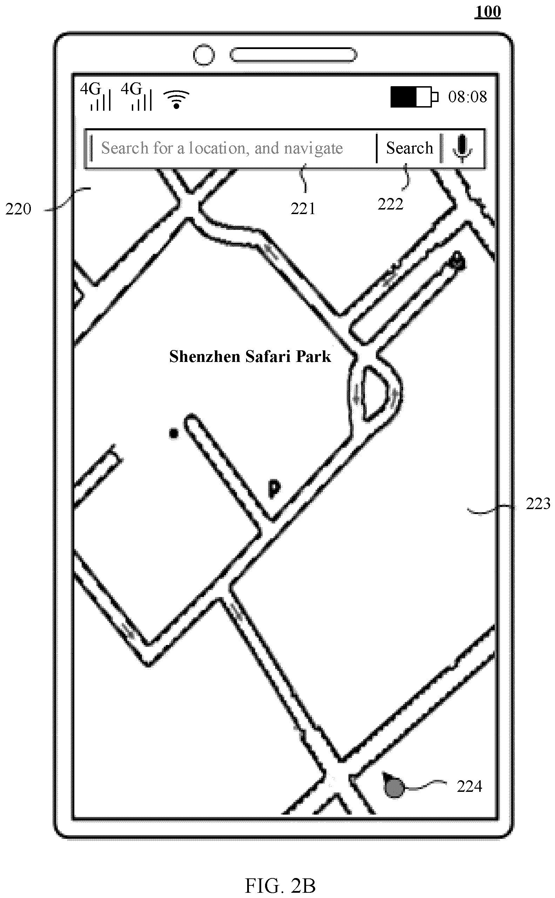

The electronic device 100 may receive an input operation (for example, tap) performed by the user on the map application icon 211. In response to the input operation, the electronic device 100 may display a map application interface 220 shown in FIG. 2B.

As shown in FIG. 2B, the map application interface 220 may include an address search input box 221, a search control 222, a map 223, and a location mark 224 of the electronic device 100 on the map 223. The address search input box 221 may be configured to receive an address name entered by the user. The search control 222 may be configured to trigger the electronic device 100 to display location information corresponding to the address name that is entered by the user.

The electronic device 100 may receive the address name (for example, "Shenzhen Safari Park") entered by the user in the address search input box 221. Then, the electronic device 100 may receive a user input operation (for example, tap) for the search control 222. In response to the input operation, the electronic device 100 may display, on the map 223, a location mark corresponding to the address name and location information corresponding to the address name.

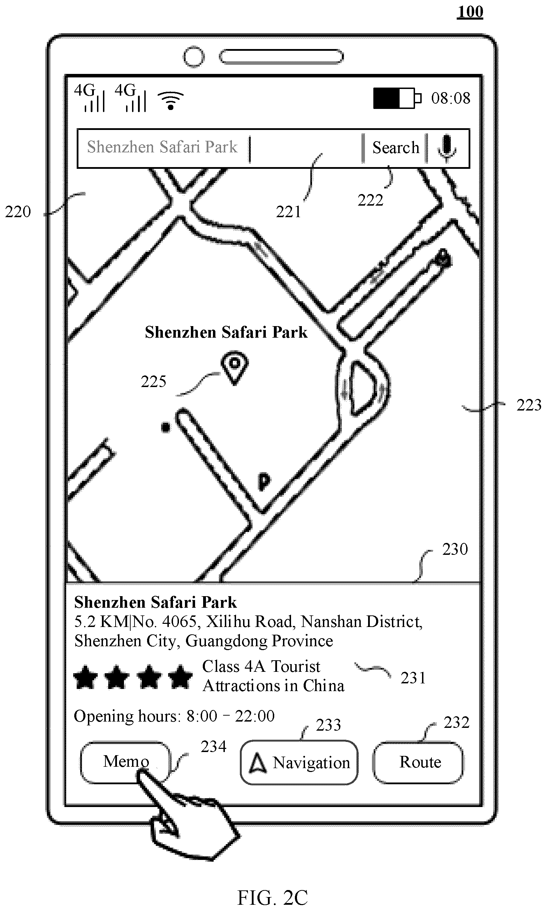

Specifically, as shown in FIG. 2C, after the electronic device 100 receives the address name (for example, "Shenzhen Safari Park") entered by the user and searches for the location information corresponding to the address name, the electronic device 100 may display, on the map 223, a location mark 225 corresponding to the address name and a details page 230 corresponding to the address name. The details page 230 of the address name includes location information 231 (for example, "No. 4065, Xilihu Road, Nanshan District, Shenzhen City, Guangdong Province") corresponding to the address name, a route control 232, a navigation control 233, a memo control 234, and the like. The route control 232 may be configured to trigger the electronic device 100 to display information about a route from a location of the electronic device 100 to a location corresponding to the address name. The navigation control 233 may be configured to trigger the electronic device 100 to display navigation information from a location of the electronic device 100 to the address name. The memo 234 may be configured to trigger the electronic device 100 to display a memo interface associated with the address name.

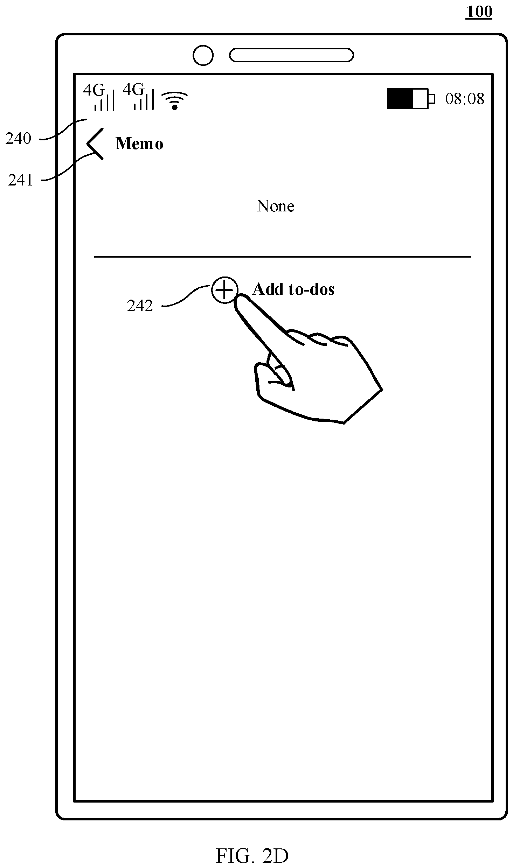

The electronic device 100 may receive an input operation (for example, tap) performed by the user on the memo 234. In response to the input operation, the electronic device 100 may display a memo interface 240 shown in FIG. 2D. Alternatively, the user taps the memo application icon 212 on the interface shown in FIG. 2A, and the electronic device 100 may display a memo interface 240 shown in FIG. 2D.

The memo may be a sub-function of the map application, or may be a reminder application that is installed in the electronic device 100 and that is independent of the map application, or a network storage application such as a web disk.

As shown in FIG. 2D, the memo interface 240 includes a return control 241 and a to-do item adding control 242. The return control 241 may be configured to trigger the electronic device 100 to display the map application interface 220 shown in FIG. 2C. The to-do item adding control 242 may be configured to trigger the electronic device 100 to add a new to-do item.

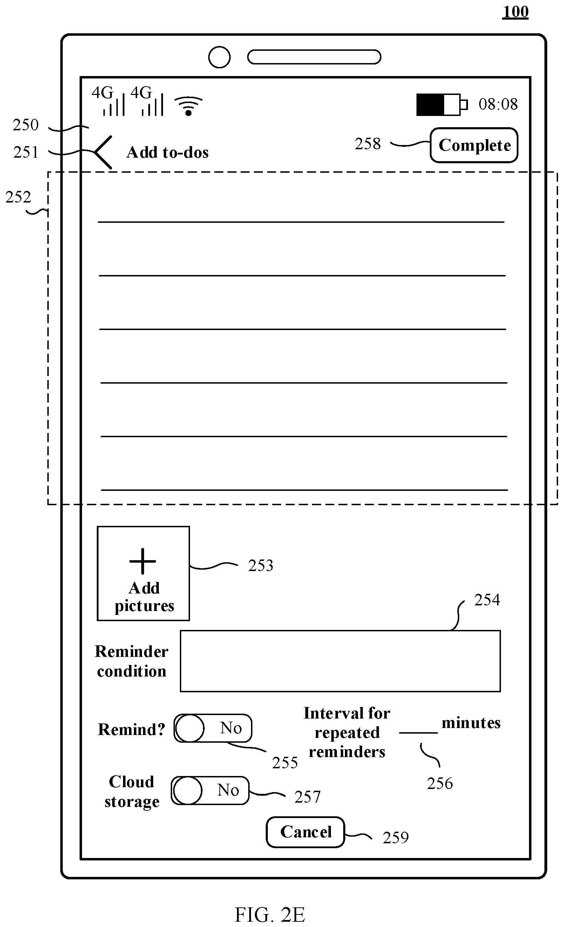

The electronic device 100 may receive an input operation (for example, tap) performed by the user on the to-do item adding control 242. In response to the input operation, the electronic device 100 may display a to-do item adding interface 250 shown in FIG. 2E.

As shown in FIG. 2E, the to-do item adding interface 250 may include a previous page control 251, an item input area 252, a picture adding control 253, a reminder condition input box 254, a reminder switch control 255, a reminder interval setting control 256, a cloud storage switch control 257, a complete control 258, and a cancel control 259. The previous page control 251 may be configured to trigger the electronic device 100 to return to the memo interface 240 shown in FIG. 2D. The item input area 252 may be configured to receive a to-do item entered by the user. The picture adding control 253 may be configured to trigger the electronic device 100 to add a local picture to a to-do item. The reminder condition input box 254 may be configured to receive a reminder occasion set by the user for the to-do item. The reminder switch control 255 may be configured to trigger the electronic device 100 to enable or disable the reminder for the to-do item. The reminder interval setting control 256 may be configured to set a single reminder, a repeated reminder, and a time interval for repeated reminders. The complete control 258 may be configured to trigger the electronic device 100 to store the to-do item and reminder setting information. The cloud storage switch control 257 may be configured to trigger the electronic device 100 to synchronize the to-do item and the reminder setting information (for example, whether to perform a reminder, a reminder condition, and an interval for repeated reminders) to a server when storing the to-do item and the reminder setting information, and associate the to-do item and the reminder setting information with a logged-in account in the map application. The cancel control 259 may be configured to trigger the electronic device 100 to cancel a to-do item that is being added.

The electronic device 100 may receive the to-do item and the reminder setting information that are entered by the user in the to-do item adding interface 250.

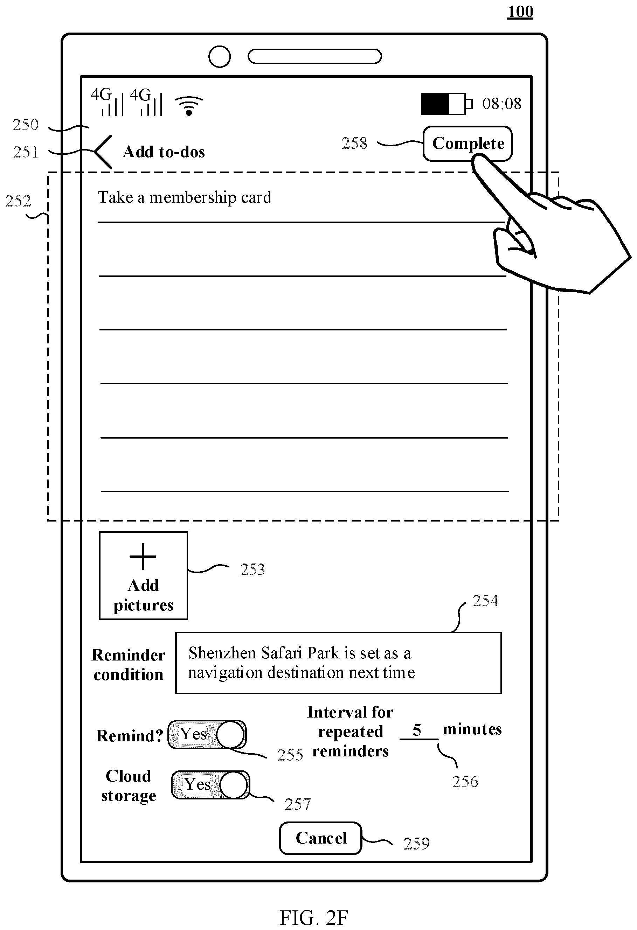

For example, as shown in FIG. 2F, content that is received by the electronic device 100 and that is entered by the user in the item input area 252 may be "Take a membership card". Reminder text entered by the user and received by the electronic device 100 may be "Shenzhen Safari Park is set as a navigation destination next time". The electronic device 100 may intelligently analyze, by using AI, a keyword in the reminder text entered by the user, for example, "Navigation", "Shenzhen", "Safari Park", or "Destination". Then, the electronic device 100 may determine, based on the keyword, that a reminder condition is "Shenzhen Safari Park is set as a navigation destination next time", and associate the reminder condition with the to-do item. The electronic device 100 may receive a user input. In response to the user input, the electronic device 100 may enable a reminder for the to-do item, and set an interval for repeated reminders as "5 minutes". The electronic device 100 may further receive a user input. In response to the user input, the electronic device 100 may store the to-do item and the reminder setting information (for example, whether to perform a reminder, a reminder condition, and an interval for repeated reminders) to the server, to associate the to-do item with the logged-in account in the map application.

After receiving the to-do item and the reminder setting information entered by the user, the electronic device 100 may receive an operation (for example, tap) performed by the user on the complete control 258. In response to the operation, the electronic device 100 may return to the memo interface 240, and display, on the memo interface 240, the to-do item added by the user.

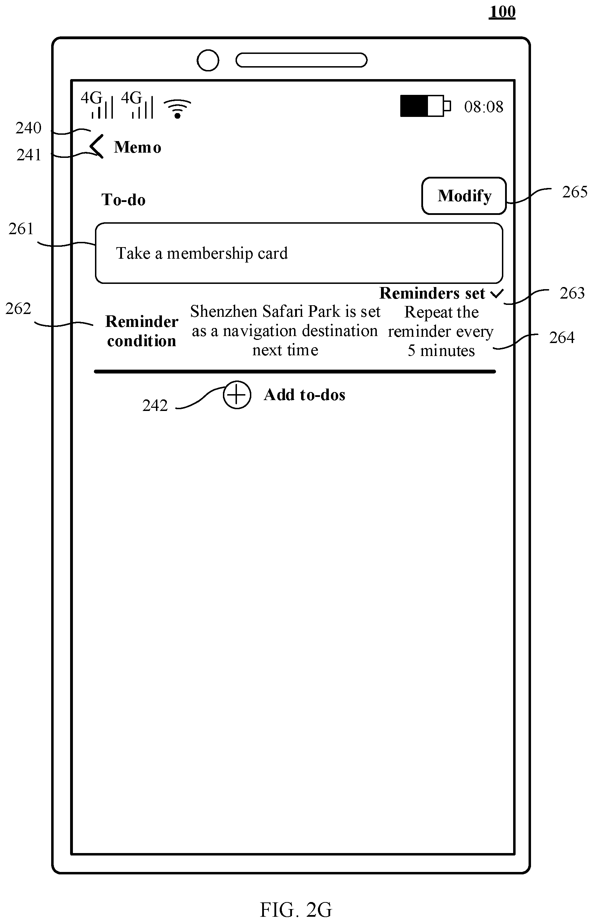

As shown in FIG. 2G, the electronic device 100 may display, on the memo interface 240, a to-do item 261 added by the user and reminder setting information (for example, whether to perform a reminder, a reminder condition, and an interval for repeated reminders) of the to-do item 261. For example, content of the to-do item 261 may be "Take a membership card", and a reminder condition 262 of the to-do item 261 may be "Shenzhen Safari Park is set as a navigation destination next time", a reminder switch mark 263 of the to-do item 261 is in an on state, and an interval 264 for repeated reminders may be "5 minutes". The electronic device 100 may further display a modification control 265 corresponding to the to-do item 261. The modification control 265 may be configured to trigger the electronic device 100 to receive a user input, to modify the to-do item 261 and the reminder setting information of the to-do item 261.

The electronic device 100 may receive a user input. In response to the user input, the electronic device 100 may add a plurality of to-do items. A reminder condition of the to-do item may include: the address name searched by the user is used as a navigation destination; the address name searched by the user is used as a navigation destination and weather of a location at which the address name is located meets a preset condition; a specified area of the location at which the address name is located is reached; and the like.

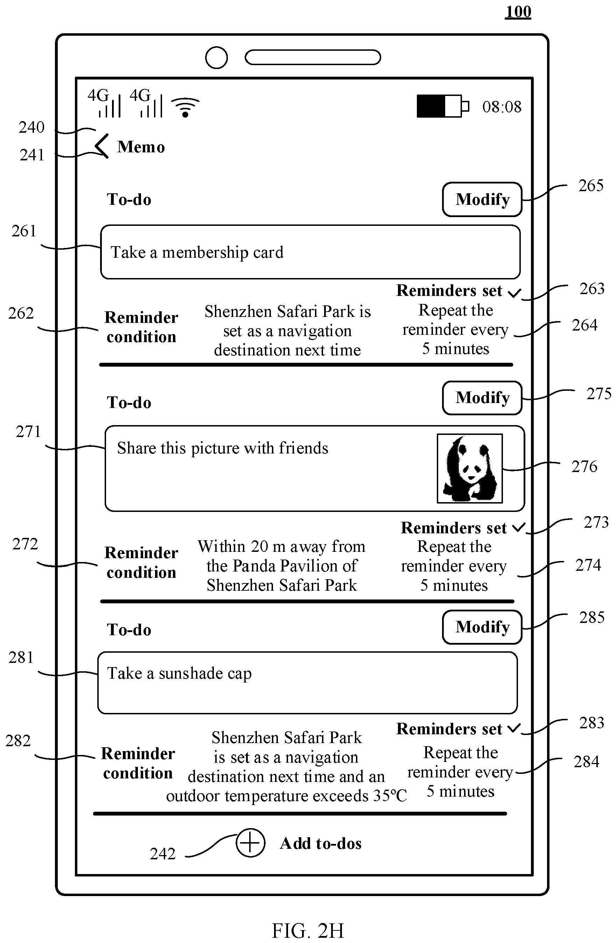

For example, as shown in FIG. 2H, the electronic device 100 may display, on the memo interface 240, a plurality of to-do items entered by the user, for example, the to-do item 261, a to-do item 271, and a to-do item 281. The content of the to-do item 261 may be "Take a membership card". A reminder condition 262 of the to-do item 261 may be "Shenzhen Safari Park is set a navigation destination next time". A reminder switch mark 263 of the to-do item 261 is displayed in an on state. The interval 264 for repeated reminders of the to-do item 261 may be "5 minutes". Content of the to-do item 271 may be "Share a picture 276 to a friend". A reminder condition 272 of the to-do item 271 may be "Within 20 m away from the Panda Pavilion of Shenzhen Safari Park". A reminder switch mark 273 of the to-do item 271 is displayed in an on state. The interval 274 for repeated reminders of the to-do item 271 may be "5 minutes". Content of the to-do item 281 may be "Take a sunshade cap". A reminder condition 282 of the to-do item 281 may be "Shenzhen Safari Park is set as a navigation destination next time and an outdoor temperature exceeds 35°C". The electronic device 100 may further display, on the memo interface 240, the modification control 265 corresponding to the to-do item 261, a modification control 275 corresponding to the to-do item 271, and a modification control 285 corresponding to the to-do item 281. The modification control 265 may be configured to trigger the electronic device 100 to receive a user input, to modify the to-do item 261 and the reminder setting information of the to-do item. The modification control 275 may be configured to trigger the electronic device 100 to receive a user input, to modify the to-do item 271 and reminder setting information of the to-do item 271. The modification control 285 may be configured to trigger the electronic device 100 to receive a user input, to modify the to-do item 281 and reminder setting information of the to-do item 281.

In a possible implementation, after the electronic device 100 sets a to-do item associated with the address name, when the user returns to the details page of the address name, or when the user searches for or views the details page of the address name next time, the electronic device 100 may highlight a memo control on the details page of the address name (for example, display the memo control in a special color).

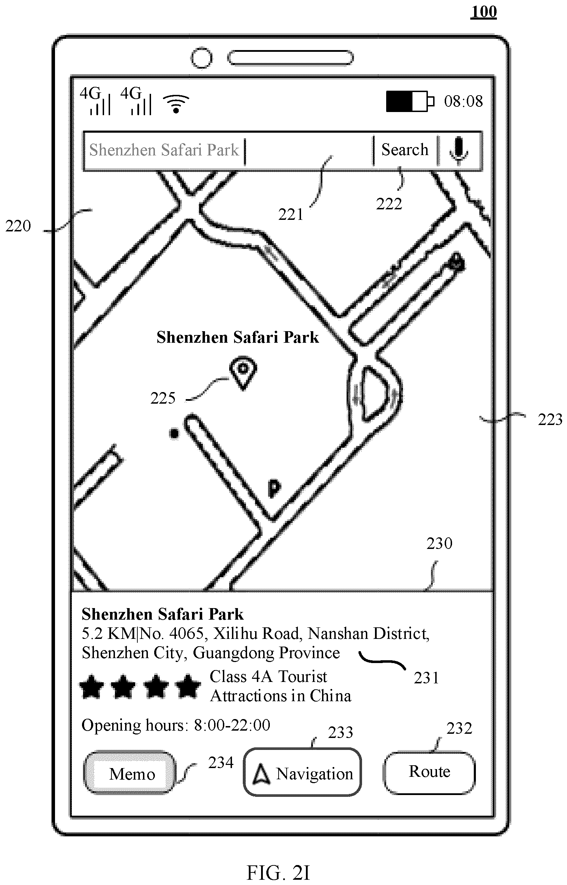

For example, as shown in FIG. 2I, after the electronic device 100 stores a to-do item associated with "Shenzhen Safari Park", if the electronic device 100 displays the details page 230 of "Shenzhen Safari Park" in the map application again, the electronic device 100 may highlight the memo control 234, to notify the user that the memo 234 includes the to-do item associated with "Shenzhen Safari Park".

In another possible implementation, after the electronic device 100 sets the to-do item associated with the address name but does not set a reminder condition, the memo control is displayed only after the user taps the navigation control or the route control. The memo control may be configured to trigger the electronic device 100 to display the to-do item associated with the address name. In another possible implementation, when the reminder condition 262 of the to-do item 261 is set to "Shenzhen Safari Park is set as a navigation destination next time", the memo control is displayed only after the user taps the navigation control or the route control.

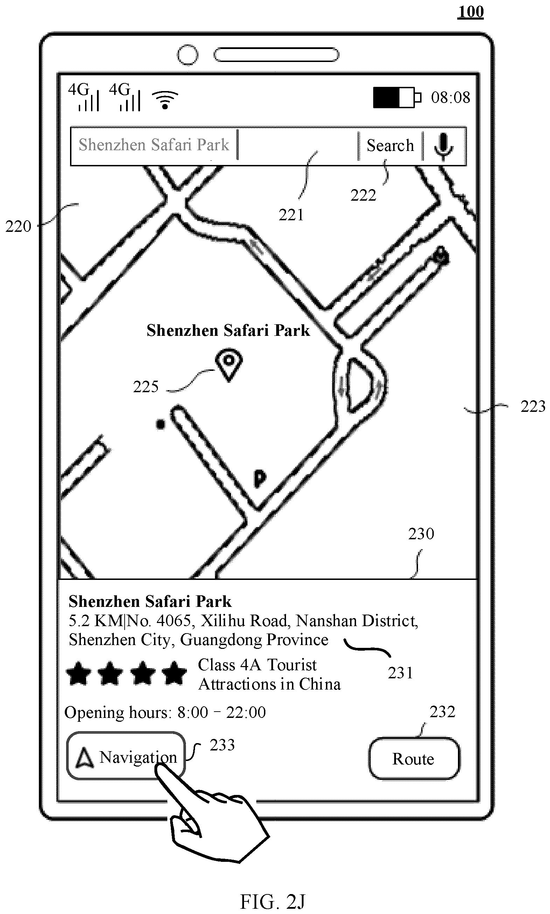

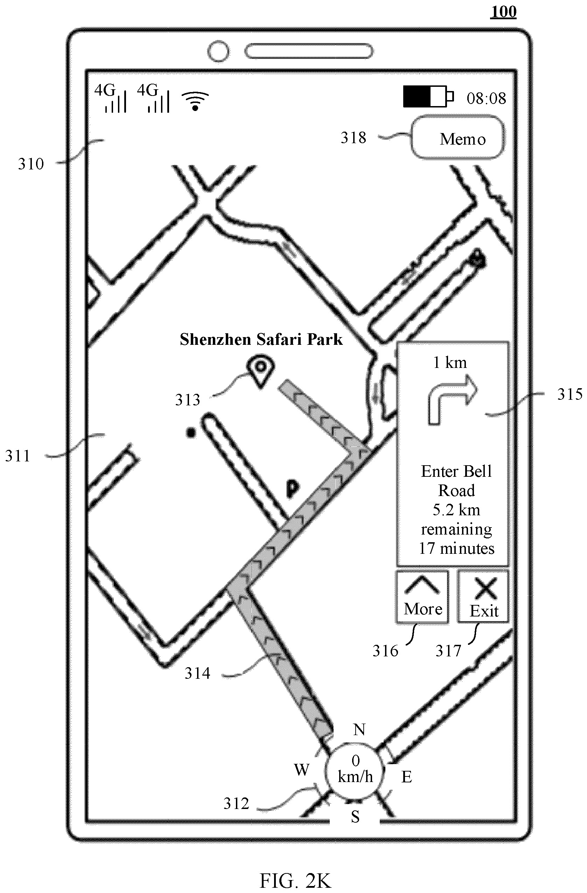

For example, as shown in FIG. 2J, after the electronic device 100 stores the to-do item associated with "Shenzhen Safari Park", if the electronic device 100 displays the details page 230 of "Shenzhen Safari Park" in the map application again, the memo control may not be displayed on the details page 230. After the electronic device 100 detects and responds to a user input operation for the navigation control 233, a memo control 318 is displayed on a navigation interface 310 shown in FIG. 2K.

As shown in FIG. 2K, the navigation interface 310 may include a map 311, a location mark 312, a location mark 313, a route 314, navigation information 315, more controls 316, a navigation exit control 317, the memo control 318, and the like. The location mark 312 is used to indicate the location of the electronic device 100 on the map 311. The location mark 313 may be used to indicate the location of the destination (for example, "Shenzhen Safari Park") on the map 311. The route 314 may be used to indicate information about the route from the location of the electronic device 100 to the destination. The navigation information 315 may include a distance (for example, 1 km) from a next intersection, turning (for example, turning right) at the next intersection, a remaining distance (for example, 5.2 km) from a name of a road (for example, Bell Road) at the next intersection to the destination, remaining time (for example, 17 minutes) for arriving at the destination, and the like. The exit control 317 may be configured to trigger the electronic device 100 to end navigation. The memo control 318 may be configured to trigger the electronic device 100 to display the to-do item associated with "Shenzhen Safari Park".

After the electronic device 100 sets the to-do item associated with the address name, the electronic device 100 may execute a reminder for the to-do item based on a reminder condition of the to-do item. The reminder type of the memo may include one or more of a text reminder, a voice reminder, a vibration reminder, and the like. The electronic device 100 may further send reminder content to a smart car connected to the electronic device, and perform reminding in a text or audio manner by using an electronic screen, a windshield projection, or a loudspeaker of the smart car.

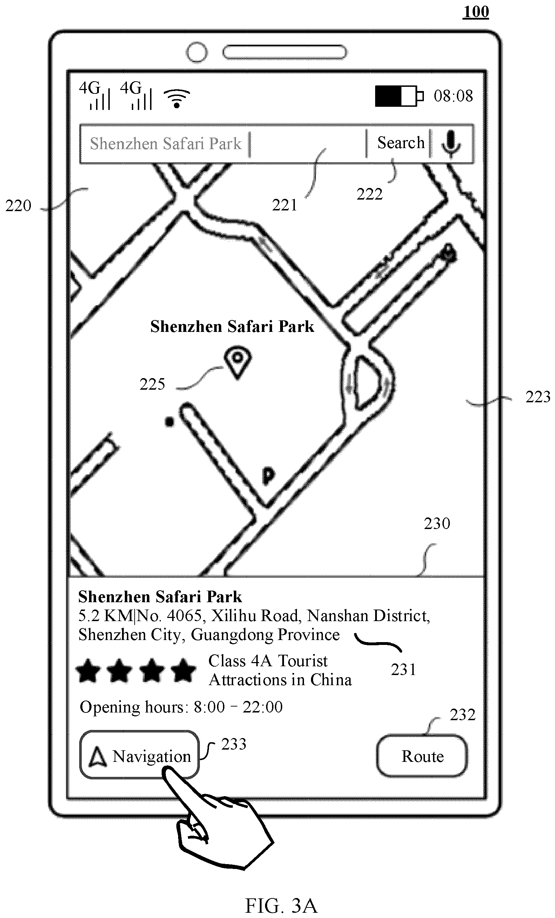

For example, a to-do item A associated with the address name "Shenzhen Safari Park" may be "Take a membership card", and a reminder condition of the to-do item A may be "Shenzhen Safari Park is set as a navigation destination next time". As shown in FIG. 3A, the electronic device 100 may display the map application interface 220, and display the details page 230 of the address name (for example, "Shenzhen Safari Park") on the map application interface 220. For text descriptions of the map application interface 220 and the details page 230, refer to the embodiment shown in FIG. 2C. Details are not described herein again.

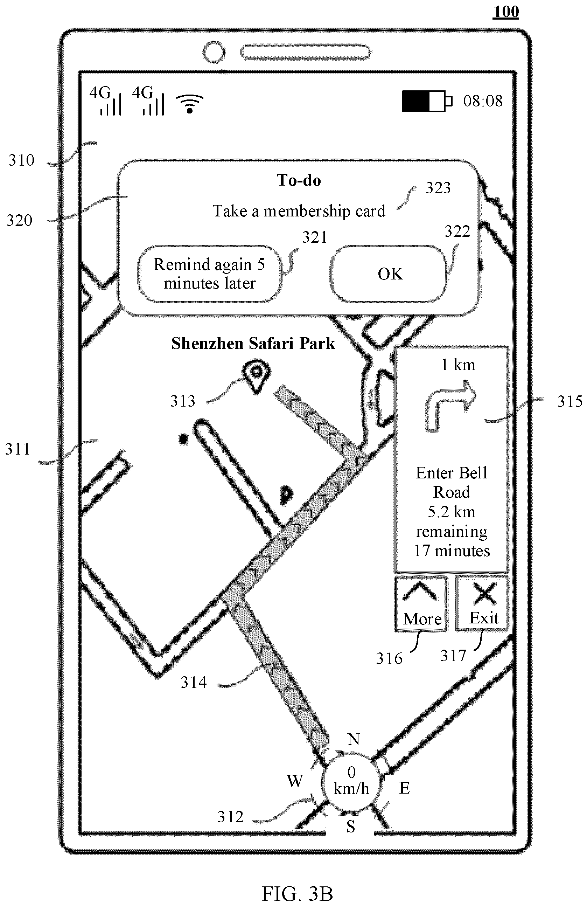

The electronic device 100 may receive an operation (for example, tap) performed by the user on the navigation control 233 on the details page 230. In response to the operation, the electronic device 100 may use "Shenzhen Safari Park" as a destination, enable a navigation function, and display the navigation interface 310 shown in FIG. 3B and a to-do item reminder box 320.

As shown in FIG. 3B, the navigation interface 310 may include the map 311, the location mark 312, the location mark 313, the route 314, the navigation information 315, the more controls 316, the navigation exit control 317, and the like. For text descriptions of the navigation interface 310, refer to the embodiment shown in FIG. 2K. Details are not described herein again. The to-do item reminder box 320 may include content 323 (for example, text "Take a membership card") of the to-do item A, a re-reminder control 321, a complete control 322, and the like. The re-reminder control 321 may be configured to trigger the electronic device 100 to display the to-do item reminder box 320 again after a time period. There may be text descriptions (for example, "OK") on the complete control 322. The complete control 322 may be configured to end displaying of the to-do item reminder box 320.

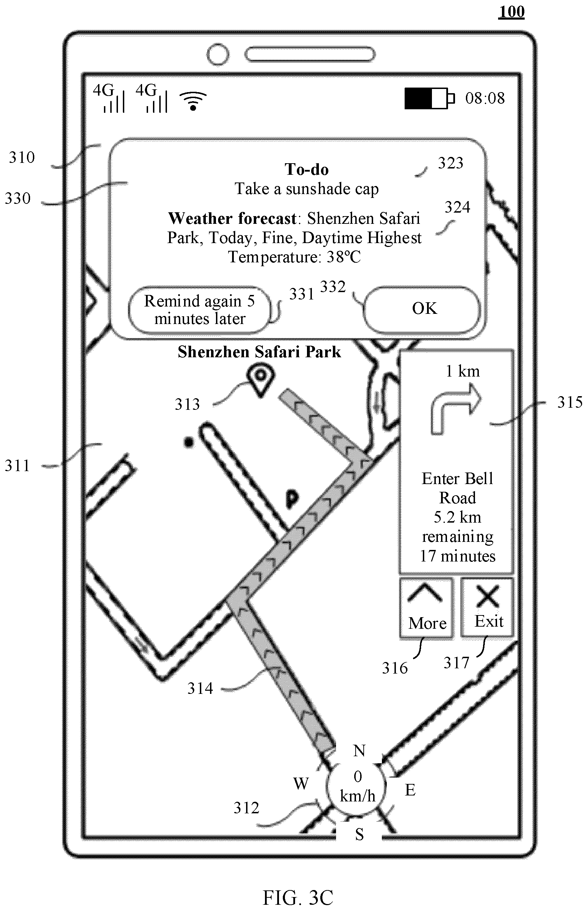

For another example, a to-do item B associated with the address name "Shenzhen Safari Park" may be "Take a sunshade cap", and a reminder condition of the to-do item B may be "Shenzhen Safari Park is set as a navigation destination next time and the temperature of Shenzhen Safari Park exceeds 35°C". As shown in FIG. 3C, when the electronic device 100 uses "Shenzhen Safari Park" as a destination and enables a navigation function, the electronic device 100 may determine whether weather (for example, the temperature of 38°C) at a location of the address name (for example, "Shenzhen Safari Park") meets a reminder condition (for example, the temperature exceeds 35°C). If the reminder condition is met, the electronic device 100 may display the navigation interface 310 and a to-do item reminder box 330. For text descriptions of the navigation interface 310, refer to the embodiment shown in FIG. 3B. Details are not described herein again. The to-do item reminder box 330 may include content 333 (for example, text "Take a sunshade cap") of the to-do item B, the re-reminder control 331, a complete control 332, and the like. Optionally, the to-do item reminder box 330 may further include weather information 324 of a destination (for example, "Shenzhen Safari Park") (for example, "Shenzhen Safari Park, today, sunny, the highest temperature in the daytime reaches 38°C"). The re-reminder control 331 may be configured to trigger the electronic device 100 to display the to-do item reminder box 330 again after a time period. There may be text descriptions (for example, "OK") on the complete control 332, and the complete control 332 may be configured to end displaying of the to-do item reminder box 330.

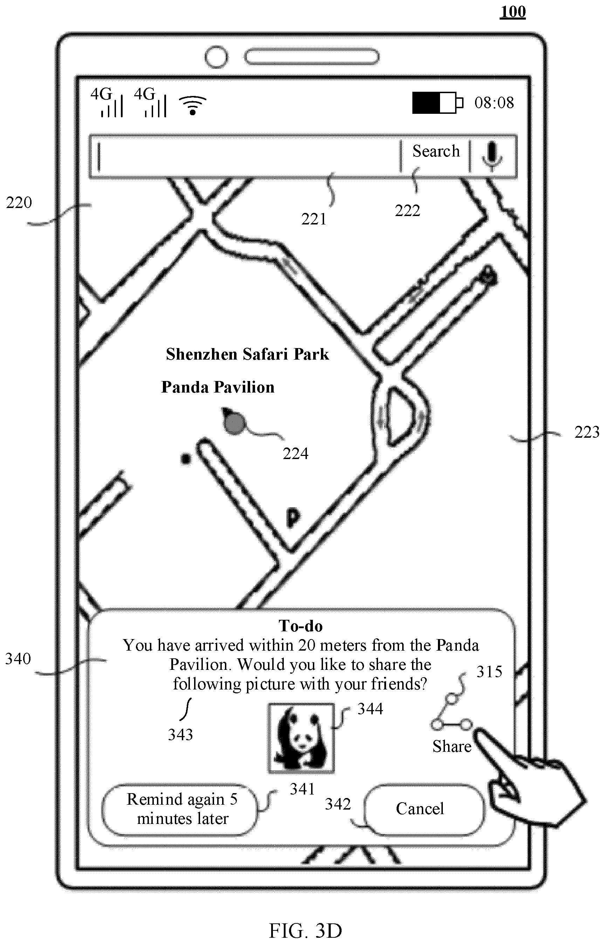

For another example, a to-do item C associated with the address name "Shenzhen Safari Park" may be "Share a picture selected by the user to a friend". The user is currently in Shenzhen Safari Park, and the user needs to search for a location of the Panda Pavilion. A reminder condition of the to-do item C may be "Arrive within 20 m of the Panda Pavilion of Shenzhen Safari Park next time". The electronic device 100 may intelligently analyze, by using AI, a keyword in reminder text entered by the user, for example, "Next time", "Shenzhen", "Safari Park", "Panda Pavilion", or "20 m". Then, the electronic device 100 may determine, from the keyword, that a reminder condition is "Arrive within 20 m of the Panda Pavilion of Shenzhen Safari Park next time", and associate the reminder condition with the to-do item. As shown in FIG. 3D, the electronic device 100 displays the map application interface 220. For text descriptions of the map application interface 220, refer to the embodiment shown in FIG. 2B. Details are not described herein again. When the electronic device 100 is within 20 m of "Panda Pavilion of Shenzhen Safari Park", the electronic device 100 may display a to-do item reminder box 340. The to-do item reminder box 340 may include content 333 of the to-do item C (for example, text "You have arrived within 20 m of the Panda Pavilion. Would you like to share the following pictures with your friends?"), the re-reminder control 331, the complete control 332, a picture thumbnail 344, a sharing control 345, and the like. The re-reminder control 331 may be configured to trigger the electronic device 100 to display the to-do item reminder box 330 again after a time period. There may be text descriptions (for example, "OK") on the complete control 332. The complete control 332 may be configured to end displaying of the to-do item reminder box 330. The picture thumbnail 344 may be used to trigger the electronic device 100 to display a picture corresponding to the picture thumbnail 344. The sharing control 345 may be configured to trigger the electronic device 100 to share the picture corresponding to the picture thumbnail 344.

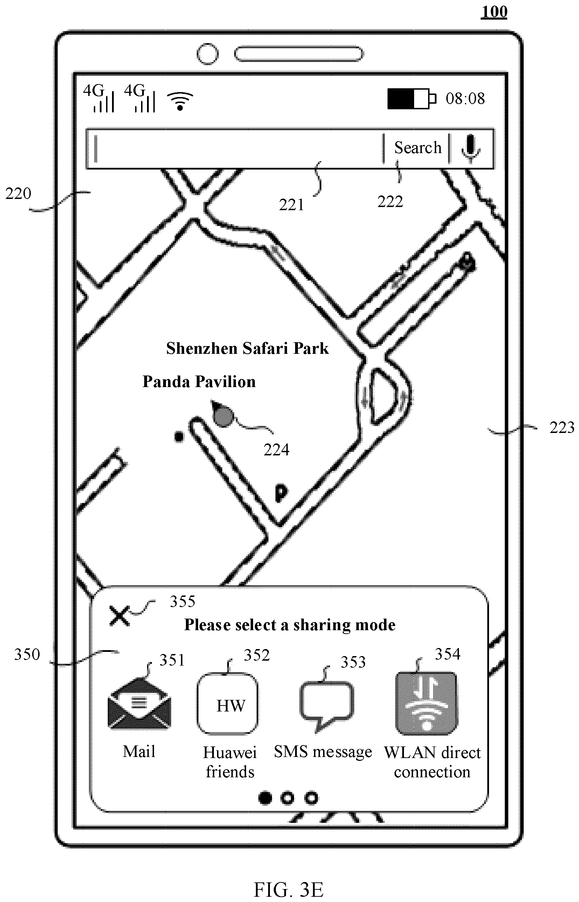

The electronic device 100 may receive an input (for example, tap) performed by the user on the sharing control 345. In response to the operation, the electronic device 100 may display a sharing box 335 shown in FIG. 3E.

As shown in FIG. 3E, the sharing box 335 includes one or more sharing application options (for example, an email application option 351, a Huawei friends application option 352, an information application option 353, and a WLAN direct application option 354). The electronic device 100 may receive an input operation performed by the user on the application sharing option. In response to the input operation, the electronic device 100 may open a sharing application selected by the user, and share, through the sharing application selected by the user, a picture corresponding to the picture thumbnail 344 with a device of a specified friend.

In this embodiment of this application, a reminder condition may also be as follows: a location of the address name (for example, "Shenzhen Safari Park") associated with the to-do item is used as a navigation destination after a specified time period (for example, half a year); the address name associated with the to-do item is used as a navigation destination next time; the electronic device 100 is connected to the in-vehicle Bluetooth device; the electronic device 100 drives to the location of the address name; or the like. When a condition of the to-do item is driving to the location of the address name, the electronic device 100 may determine whether a moving speed of the electronic device 100 exceeds a specified speed value or whether the electronic device 100 drives on a route to which the location of the address name belongs. If the electronic device drives such a route, the electronic device 100 may trigger a reminder for the to-do item.

In some embodiments, the electronic device 100 may set, in the map application, only the to-do item associated with the address name, and does not need to set a reminder condition. The electronic device 100 may trigger a reminder for the to-do item when the address name is entered in a search input box of the map application next time. Alternatively, the electronic device 100 may trigger a reminder for the to-do item when the address name through the map application is searched. Alternatively, when using a location of the address name as a navigation destination, the electronic device 100 may trigger a reminder for the to-do item. In this way, when the user looks at a location of a destination at home and searches for an address name, the electronic device may provide a reminder for the to-do item associated with the address name, so that the user can take all articles for travel before leaving.

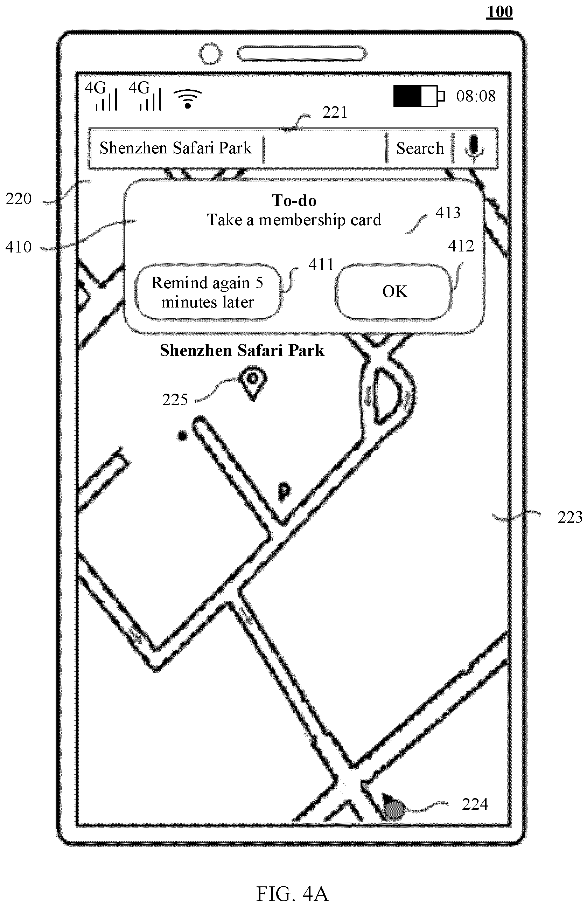

For example, the to-do item A associated with the address name "Shenzhen Safari Park" may be "Take your membership card". As shown in FIG. 4A, when the electronic device 100 detects that the user enters the address name "Shenzhen Safari Park" in the input box 221 on the map application interface 220, before the user taps the search control, the electronic device 100 may trigger a reminder for the to-do item A, to display a to-do item reminder box 410. The to-do item reminder box 410 may include content 413 (for example, text "Take a membership card") of the to-do item A, a re-reminder control 411, a complete control 412, and the like. For text descriptions of the to-do item reminder box 410, refer to the descriptions of the to-do item reminder 320 in the embodiment shown in FIG. 3B. Details are not described herein again.

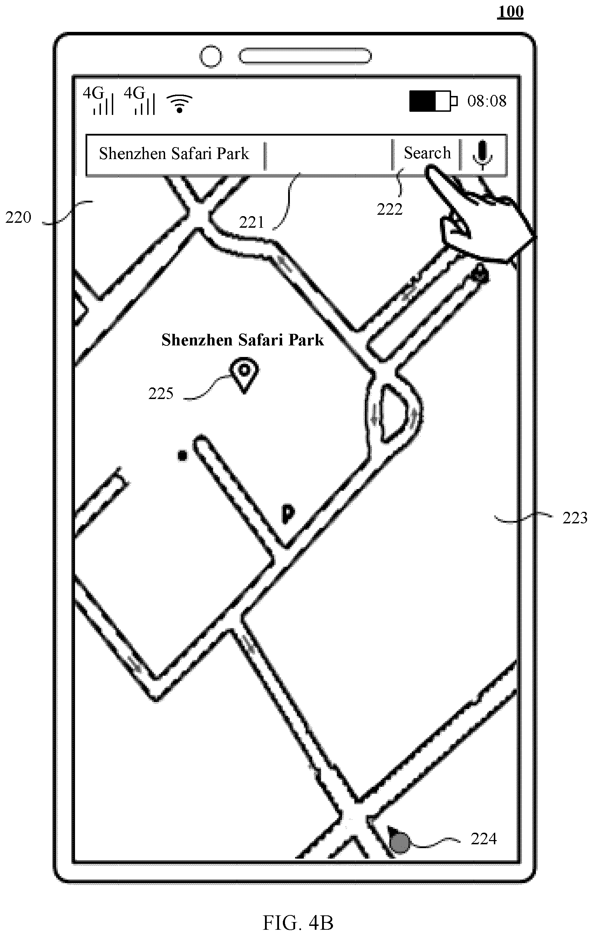

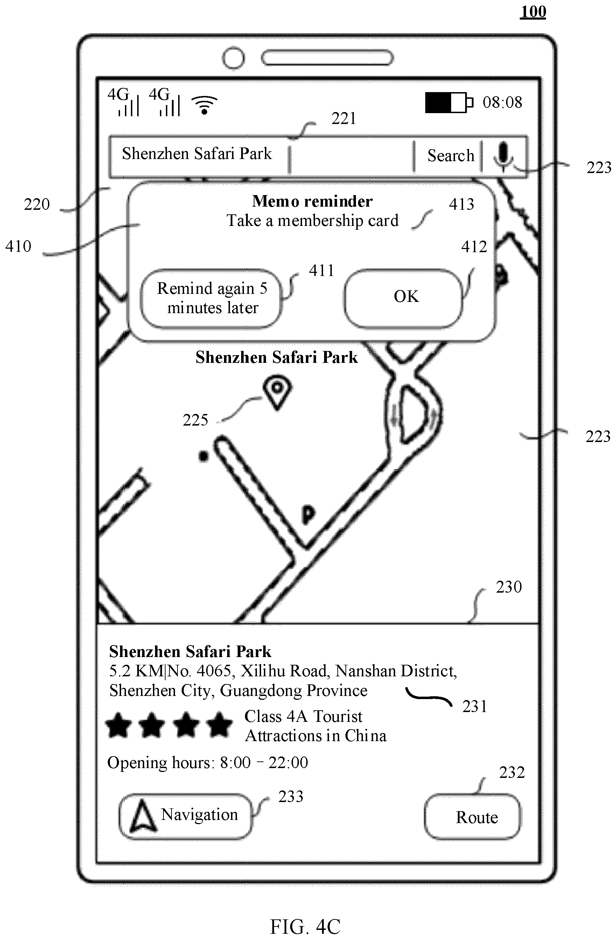

For another example, the to-do item A associated with the address name "Shenzhen Safari Park" may be "Take your membership card". As shown in FIG. 4B, after the electronic device 100 receives that the user enters the address name "Shenzhen Safari Park" in the input box 221 on the map application interface 220, the electronic device 100 may receive an operation (for example, tap) performed by the user on the search control 222 on the map application interface 220. In response to the operation, the electronic device 100 may display the details page 230 of the address name shown in FIG. 4C, trigger a reminder for the to-do item A, and display the to-do item reminder box 410. For text descriptions of the to-do item 410, refer to the embodiment shown in FIG. 4A. Details are not described herein again.

In a possible implementation, an occasion on which the electronic device 100 triggers a reminder for the to-do item may further include the following conditions: the electronic device 100 uses the address name associated with the to-do item as a navigation destination after a specified time period (for example, half a year); the electronic device 100 uses the address name associated with the to-do item as a navigation destination next time and the electronic device 100 connects to the in-vehicle Bluetooth device; the electronic device 100 uses the address name associated with the to-do item as a navigation destination, and a moving speed of the electronic device 100 exceeds a specified speed value (for example, 30 km/h); the electronic device 100 detects that the electronic device 100 drives on a specific route (for example, a route to which the location of the address name belongs); or the like.

In some embodiments, the electronic device 100 may be connected to an in-vehicle infotainment Bluetooth device. When triggering navigation to a destination in response to receiving a user input, the in-vehicle infotainment Bluetooth device may obtain a to-do item associated with the destination on the electronic device 100, trigger a reminder for the to-do item, and output reminder information. In a possible implementation, when triggering navigation to the destination in response to receiving the user input, the in-vehicle infotainment Bluetooth device may send an address name of the destination to the electronic device 100. The electronic device 100 may obtain, based on the address name of the destination, the to-do item associated with the destination on the electronic device 100, trigger a reminder for the to-do the, and output the reminder information. A manner of outputting the reminder information may be displaying the reminder information, outputting the reminder information by voice, or the like.

In some embodiments, the electronic device 100 may set, in the map application, only the to-do item associated with the address name, and does not need to separately set a reminder condition. The electronic device 100 may detect a weather condition included in the to-do item. When the address name is entered in the search input box of the map application next time, the electronic device 100 may determine whether the weather condition is met. If the weather condition is met, the electronic device 100 may trigger a reminder for the to-do item. Alternatively, when the address name is searched through the map application, the electronic device 100 may determine whether the weather condition is met. If the weather condition is met, the electronic device 100 may trigger a reminder for the to-do item. Alternatively, when using the location of the address name as a navigation destination, the electronic device 100 may determine whether the weather condition is met. If the weather condition is met, the electronic device may trigger a reminder for the to-do item.

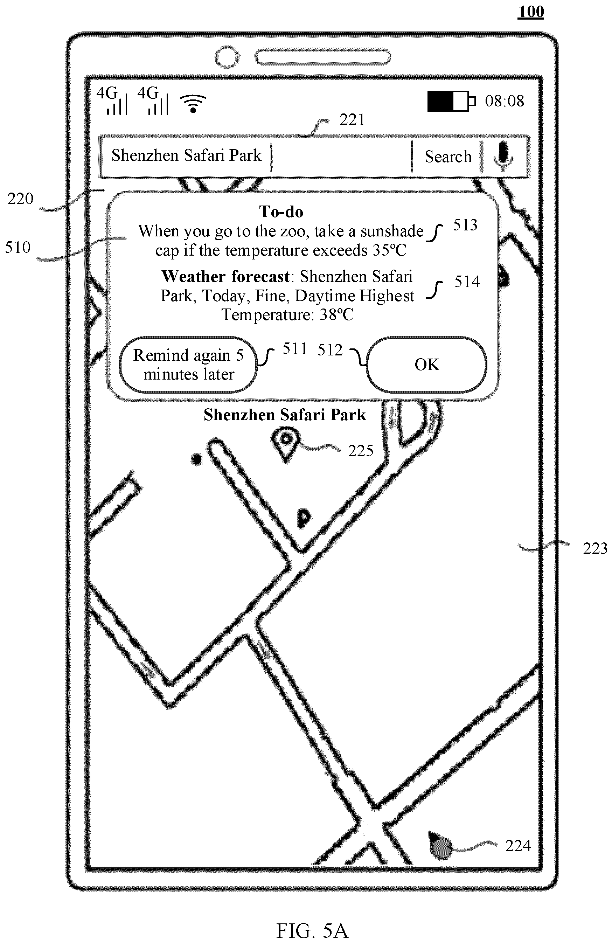

For example, a to-do item D associated with the address name "Shenzhen Safari Park" may be "When you go to the zoo, take a sunshade cap if the temperature exceeds 35°C". The weather condition included in the to-do item D is "The temperature exceeds 35°C". As shown in FIG. 5A, when the electronic device 100 detects that the user enters the address name "Shenzhen Safari Park" in an input box 211 on the map application interface 220, the electronic device 100 may detect whether the temperature of the location of the address name (for example, "Shenzhen Safari Park") exceeds 35°C. If the temperature exceeds 35°C, the electronic device 100 may trigger a reminder for the to-do item D, and display a to-do item reminder box 510. The to-do item reminder box 510 may include content 513 of the to-do item A (for example, text "When you go to the zoo, take a sunshade cap if the temperature exceeds 35°C"), a re-reminder control 511, a complete control 512, and the like. Optionally, the to-do item reminder box 510 may further display weather information 514 (for example, text "Shenzhen Safari Park, today, sunny, the highest temperature in the daytime reaches 38°C").

In some application scenarios, the electronic device 100 may receive a user input and add a to-do item to a reminder application such as a memo. A reminder condition of the to-do item may be set to: a navigation destination is a specified location; the electronic device 100 sets an address of the specified location as a navigation destination after a time period; the electronic device sets the specified location as a navigation destination and connects to the in-vehicle Bluetooth device; the electronic device 100 detects that the user drives to the specified location; or the like. After the electronic device 100 starts the map application, the electronic device 100 may obtain the to-do item and the reminder condition of the to-do item from the reminder application, and determine whether a navigation destination in the map application and/or environment information (for example, weather information) of the specified location meet/meets the reminder condition. If the reminder condition is met, the electronic device 100 may trigger a reminder for the to-do item. In this way, a reminder occasion for a reminder in the memo is associated with the destination in the map application, to remind the user of the reminder when the user needs to go to the destination next time. Therefore, accuracy of the reminder occasion is improved.

It should be noted that in this embodiment of this application, applications that record a to-do item and memo information may be collectively referred to as a reminder application, for example, a memo application and a note application in the Android operating system, and a reminder (Reminder) application in the IOS.

In this embodiment of this application, a software system of the electronic device 100 may associate the map with the memo. When the electronic device 100 runs the map application, the software system of the electronic device 100 may invoke a to-do item in the memo through an interface. Specifically, after the user opens the map application, the software system of the electronic device 100 may automatically invoke the item in the memo. After the user enters the address, the software system of the electronic device 100 may automatically extract content in the input box, and check, by using the content in the input box, extracted items to obtain a matched reminder associated with the content.

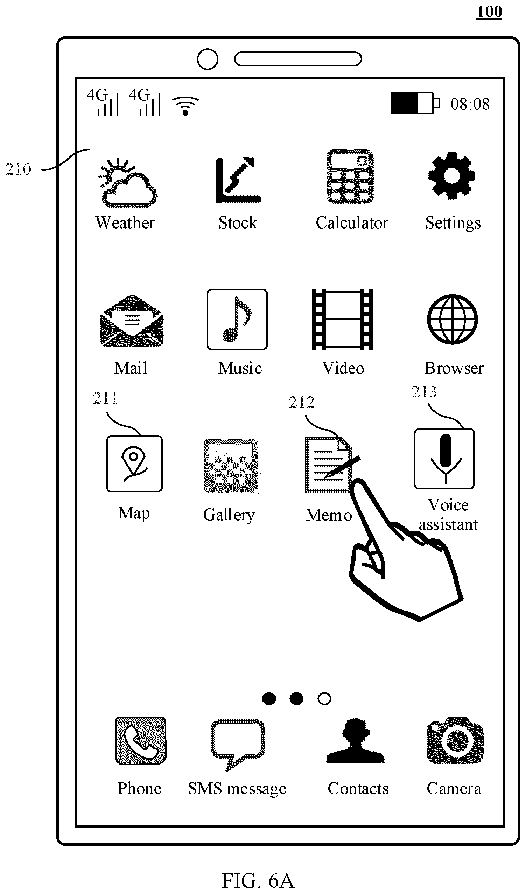

For example, as shown in FIG. 6A, the electronic device 100 may display the interface 210 with the home screen. For text descriptions of the interface 210, refer to the embodiment shown in FIG. 2A. Details are not described herein again.

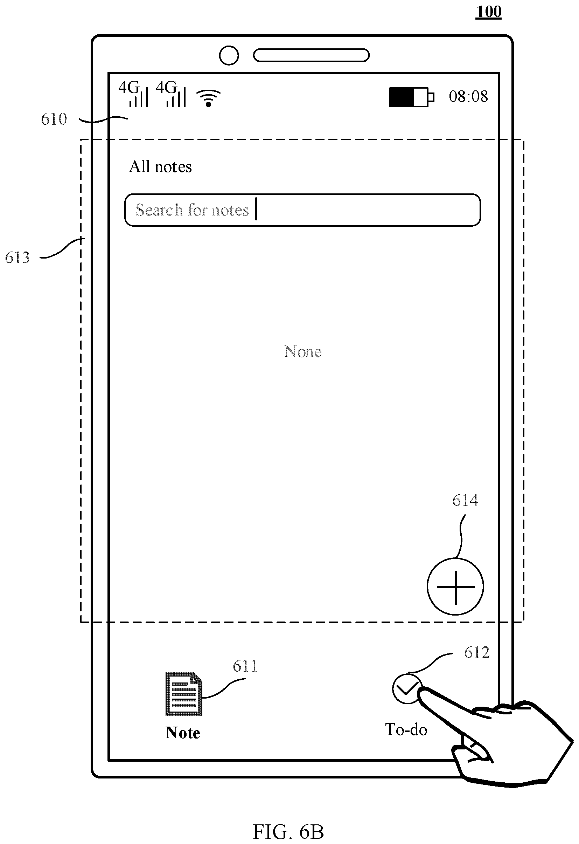

The electronic device 100 may receive an operation (for example, tap) performed by the user on the memo application icon 212. In response to the operation, the electronic device 100 may display a memo application interface 610 shown in FIG. 6B.

As shown in FIG. 6B, the memo application interface 610 includes a note control 611, a to-do control 612, and a note display area 613. The note control 611 may be configured to trigger the electronic device 100 to display the note display area 613. The note display area 613 may include a note that has been added by the user and a note adding control 614. The note adding control 614 may be configured to trigger the electronic device 100 to receive a user input, and add a note in response to the input. The to-do control 612 is configured to trigger the electronic device 100 to display a to-do item display area.

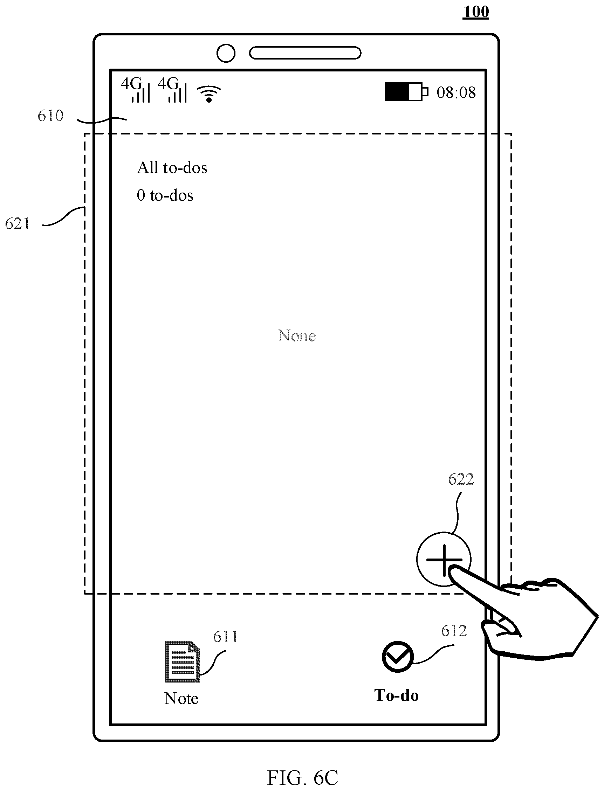

The electronic device 100 may receive an operation (for example, tap) performed by the user on the to-do control 612. In response to the operation, the electronic device 100 may display a to-do item display area 621 shown in FIG. 6C.

As shown in FIG. 6C, the to-do item display area 621 may include a to-do item adding control 622 added by the user. The to-do item adding control 622 may be configured to trigger the electronic device 100 to receive a user input, and add a to-do item in response to the user input.

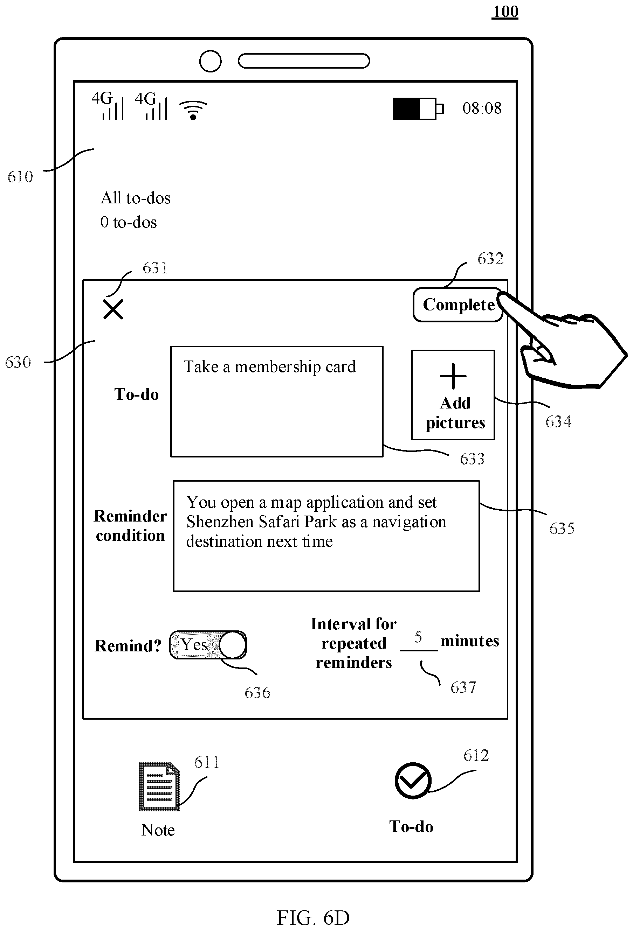

The electronic device 100 may receive an operation (for example, tap) performed by the user on the to-do item adding control 622. In response to the operation, the electronic device 100 may display a to-do item adding page 630 shown in FIG. 6D.

As shown in FIG. 6D, the to-do item adding page 630 includes a close control 631, a complete control 632, a to-do item edit box 633, a picture adding control 634, a reminder condition input box 635, a reminder switch 636, a reminder interval setting control 636, and the like. The close control 631 may be configured to trigger the electronic device 100 to close displaying of the to-do item adding page 630. The complete control 632 may be configured to trigger the electronic device 100 to store a to-do item and reminder setting information that are entered on the to-do item adding page 630. The to-do item edit box 633 may be configured to receive a to-do item (for example, "Take a membership card") entered by the user. The picture adding control 634 may be configured to trigger the electronic device 100 to add a local picture to a to-do item. The reminder condition input box 635 may be configured to receive a reminder occasion set by the user for the to-do item (for example, "You open a map application next time and set "Shenzhen Safari Park" as a destination"). The reminder switch control 636 may be configured to trigger the electronic device 100 to enable or disable a reminder for the to-do item (for example, the user sets the reminder switch control 636 to an on state). The reminder interval setting control 637 may be used to set a single reminder, a repeated reminder, and a time interval (for example, five minutes) for repeated reminders.

After receiving the to-do item and the reminder setting information entered by the user, the electronic device 100 may receive an operation (for example, tap) performed by the user on the complete control 632. In response to the operation, the electronic device 100 may store the to-do item and the reminder setting information entered by the user on the to-do item adding page 630.

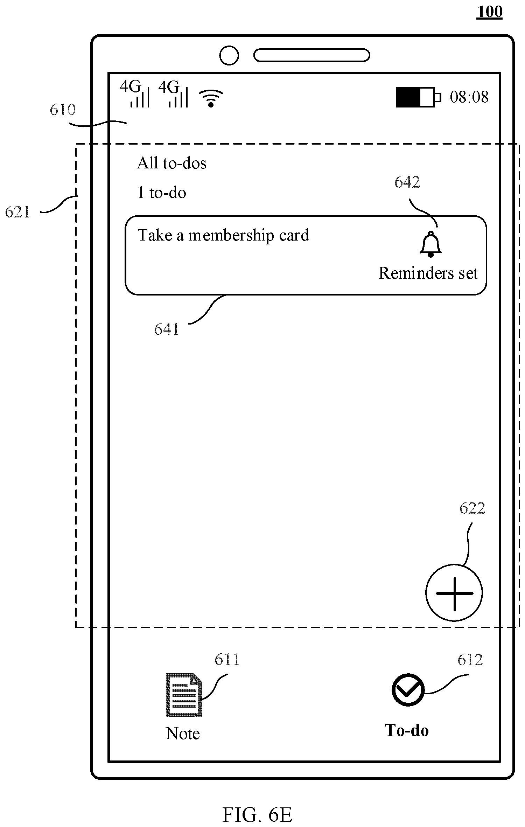

As shown in FIG. 6E, the electronic device 100 may display, in the to-do item display area 621, a to-do item 641 added by the user. Content of the to-do item 641 may be "Take a membership card". The electronic device 100 may further display reminder status information 642 (for example, a reminder is enabled) of the to-do item 641.

After the electronic device 100 starts the map application, the electronic device 100 may obtain the to-do item and the reminder condition of the to-do item from the memo application, and determine whether a device status and/or environment information (for example, weather information) of the specified location meet/meets the reminder condition. If the reminder condition is met, the electronic device 100 may trigger a reminder for the to-do item.

For example, after the electronic device 100 starts the map application, the electronic device 100 may obtain a to-do item E from the memo application. Content of the to-do item E may be "Take a membership card", and a reminder condition of the to-do item E may be "You open a map application next time and set "Shenzhen Safari Park" as a destination". When the electronic device 100 sets "Shenzhen Safari Park" as a navigation destination in the map application, the electronic device 100 may trigger a reminder for the to-do item E. For a specific reminder type of the to-do item E, refer to the embodiment shown in FIG. 4A and FIG. 4B. Details are not described herein again.

In some application scenarios, the electronic device 100 may receive a user input and add memo information to the reminder application such as a memo, without a need to set a reminder condition. The memo information may be used to record things that the user needs to do when going to a specified location in the future (for example, the memo information may be "Take a membership card when going to the zoo"). When the user sets a navigation destination in the map application, the electronic device 100 may check, from the reminder application such as a memo, whether there is memo information associated with the navigation destination. If there is the memo information associated with the navigation destination, the electronic device 100 may trigger a reminder for the memo information. When the user navigates to the destination through the map application, the electronic device 100 may check the memo information in the reminder application such as a memo. Alternatively, when receiving a user input to navigate to the destination and connecting to a Bluetooth car kit, the electronic device 100 may check the memo information in the reminder application such as a memo. In this way, it can be implemented that the user only needs to record, in the reminder application such as a memo, a thing that needs to be done when the user goes to a specified location, so that the user can be reminded of the thing that needs to be done at an accurate moment. Therefore, user experience is improved.

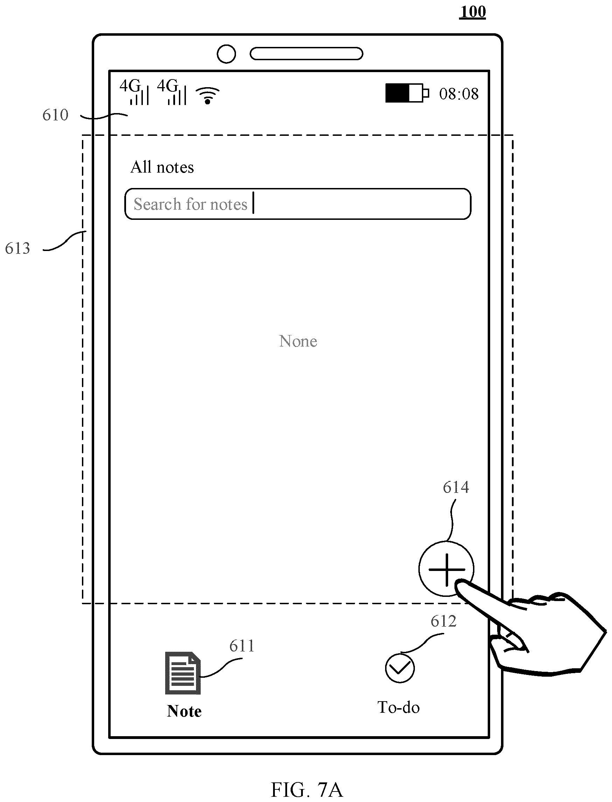

For example, as shown in FIG. 7A, the electronic device 100 displays the memo application interface 610. The memo application interface 610 includes the note control 611, the to-do control 612, the note display area 613, and the note adding control 614. For text descriptions of the memo application interface 610, refer to the embodiment shown in FIG. 6B. Details are not described herein again.

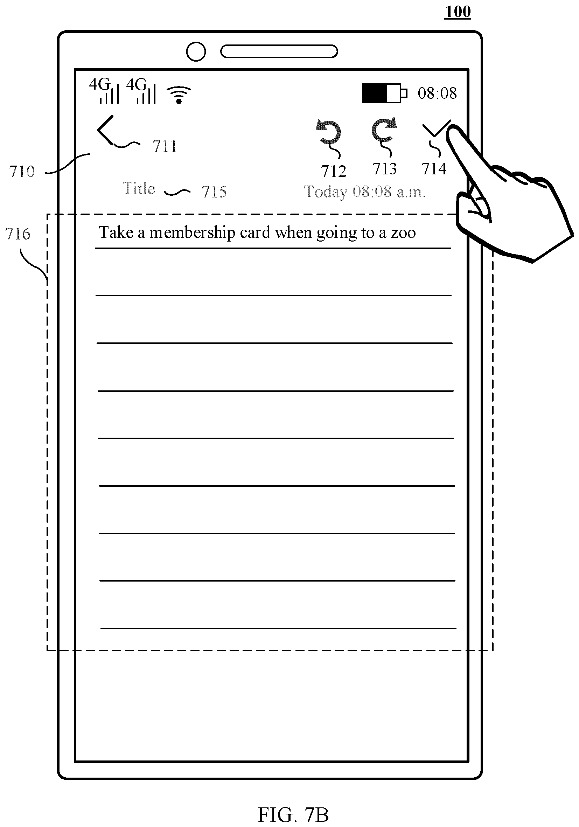

The electronic device 100 may receive an operation (for example, tap) performed by the user on the note adding control 614. In response to the operation, the electronic device 100 may display a note editing interface 710 shown in FIG. 7B.

As shown in FIG. 7B, the note editing interface 710 includes a return control 711, an undo control 712, a restore control 713, a complete control 714, a title input area 715, a note input area 716, and the like. The return control 711 may be configured to trigger the electronic device 100 to return from the note editing interface 710, to display the memo application interface 610. The undo control 712 may be configured to trigger content deleted by the user of the electronic device 100 in the note input area 716. The restore control 713 may be configured to trigger the electronic device 100 to restore a deletion operation of the user in the note input area 716. The complete control 714 may be configured to trigger the electronic device 100 to store note content entered by the user in the note input area 716. The title input area 715 may be configured to receive a note title entered by the user. The note input area 716 may be configured to receive the note content entered by the user.

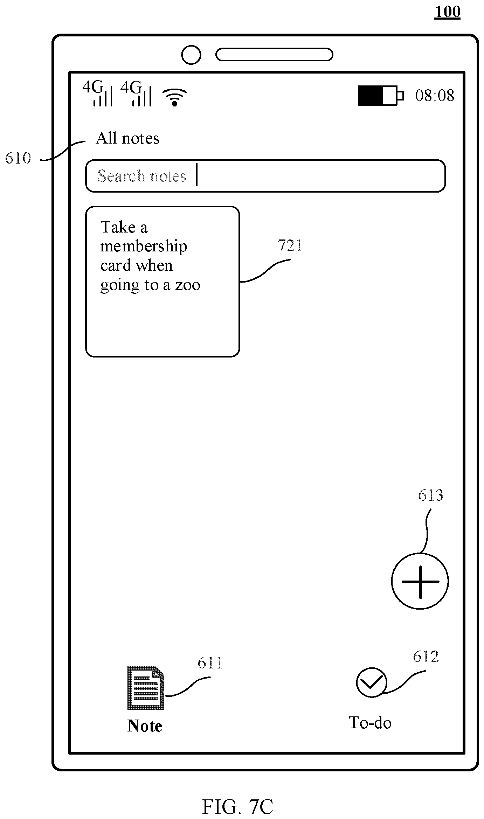

After the user enters the note content (for example, text content "Take a membership card when going to the zoo") in the note input area 716, the electronic device 100 may receive an operation (for example, tap) performed by the user on the complete control 714. In response to the operation, the electronic device 100 may store the note content entered by the user, and display a note option 721 on a memo application interface 610 shown in FIG. 7C. Some or all of the note content entered by the user is displayed on the note option 721.

The electronic device 100 receives the operation of the user. In response to the operation, the electronic device 100 opens the map application, and sets a navigation destination in the map application. In this case, the electronic device 100 may check, from the reminder application such as a memo, whether there is memo information (for example, note content corresponding to the foregoing note option 721) corresponding to the navigation destination. If there is the memo information, the electronic device 100 may trigger a reminder for the memo information.

For example, the electronic device 100 receives the operation of the user. In response to the operation, the electronic device 100 opens the map application to navigate to a destination (for example, "Shenzhen Safari Park"). In this case, the electronic device 100 may check, from the reminder application such as a memo, whether there is memo information associated with the destination. For example, the memo information may be the note content corresponding to the foregoing note option 721 (for example, "Take a membership card when going to the zoo"). The destination is "Shenzhen Safari Park", and "Shenzhen Safari Park" is also the zoo. Therefore, the memo application includes the memo information associated with the destination.

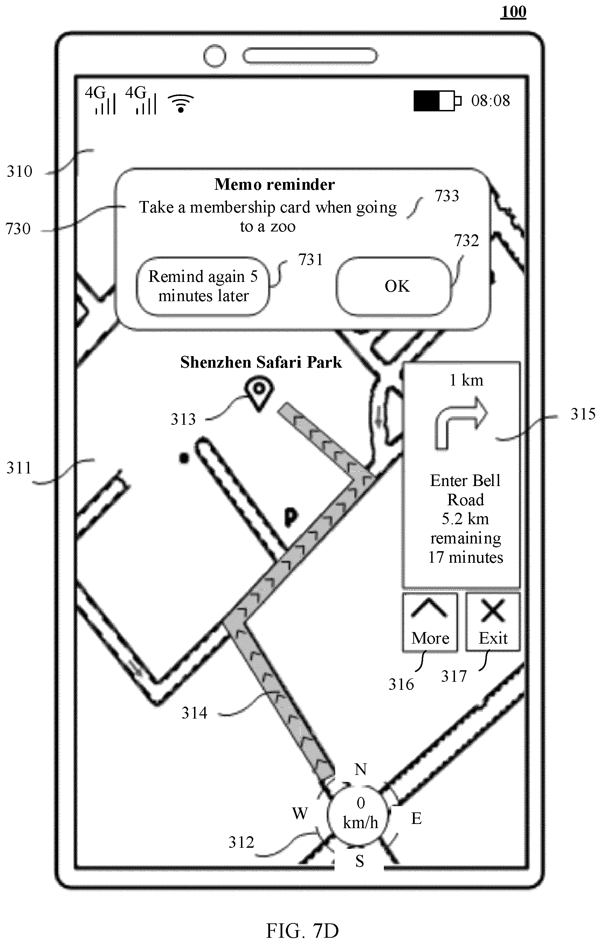

As shown in FIG. 7D, when displaying the navigation interface 310, the electronic device 100 may trigger a reminder for the memo information, and display a memo reminder box 730. For text descriptions of the navigation interface 310, refer to the embodiment shown in FIG. 3B. Details are not described herein again. The memo reminder box 730 may include memo information 733 (for example, "Take a membership card when going to the zoo"), a re-reminder control 731, and a complete control 732. The re-reminder control 731 may be configured to trigger the electronic device 100 to display the memo reminder box 730 again after a time period. There may be text descriptions (for example, "OK") on the complete control 732. The complete control 732 may be configured to end displaying of the memo reminder box 730.

Optionally, the electronic device 100 may further trigger a reminder for the memo information (for example, display the memo reminder box 730) when the user enters a destination in a search box on a map application interface. Alternatively, the electronic device 100 may further trigger a reminder for the memo information when a destination is found and a details page of the destination is displayed.

In some application scenarios, the electronic device 100 may receive a user input and add memo information to the reminder application such as a memo, without a need to set a reminder condition. The memo information may be used to record things that the user needs to do when going to a specified location in the future (for example, the memo information may be "Take a membership card when going to the zoo"). When the user enables an input method on the electronic device 100 and enters an address name, the electronic device 100 may check, from the reminder application such as a memo, whether there is memo information associated with the address name. If there is the memo information associated with the address name, the electronic device 100 may trigger a reminder for the memo information, and display a memo control in an input method input area. The memo control may be used to trigger the electronic device 100 to display the memo information associated with the address name. In this way, it can be implemented that the user only needs to record, in the reminder application such as a memo, a thing that needs to be done when the user goes to a specified location, so that the user can be reminded of the thing that needs to be done at an accurate moment. Therefore, user experience is improved.

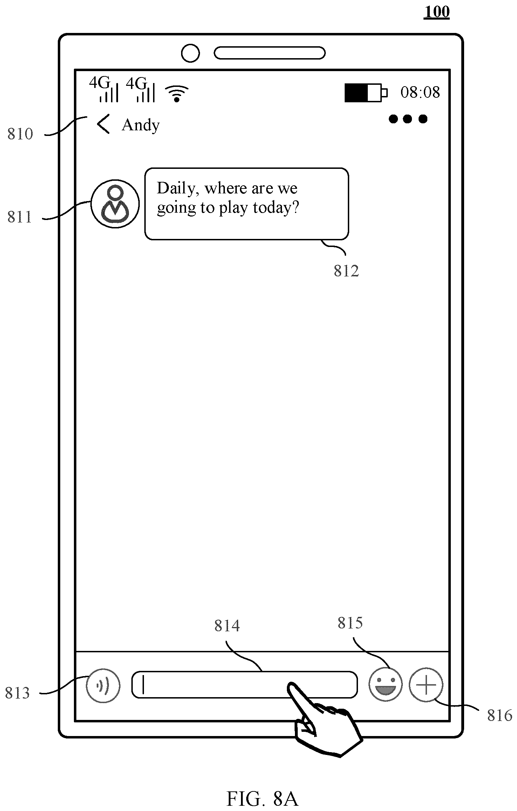

For example, as shown in FIG. 8A, the electronic device 100 displays a chat interface 810. The chat interface 810 includes a contact name (for example, "Andy"), a contact avatar 811, a chat message 812, a voice input control 813, a text input box 814, an emoticon control 815, and a more function control 816. The chat message 812 may be a text message (for example, "Daily, where are we going to play today?"), an image message, a video message, and the like. The voice input control 813 may be configured to trigger the electronic device 100 to replace the text input box 814 with a voice input box for display. The text input box 814 may be configured to receive a text or an emoticon entered by the user. The emoticon control 815 may be configured to trigger the electronic device 100 to display more chat function controls (for example, a picture sending control, a video sending control, and a photographing sending control).

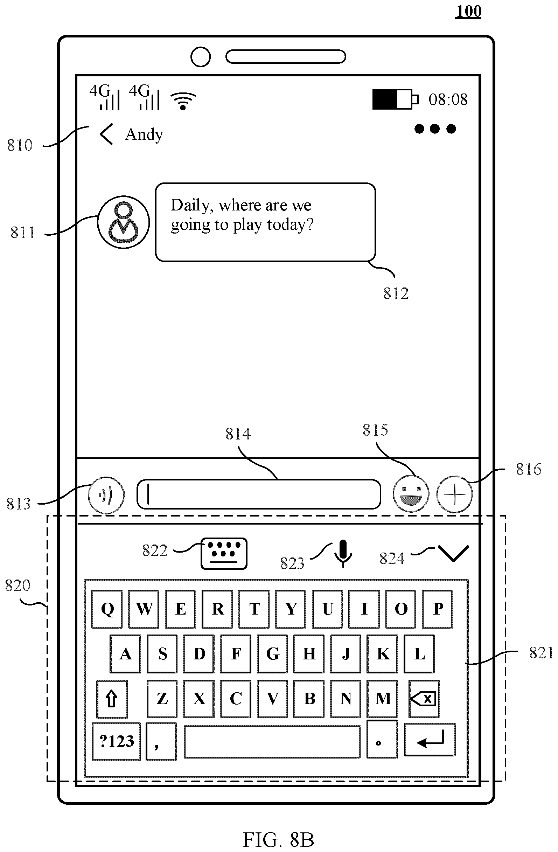

The electronic device 100 may receive an operation (for example, tap) performed by the user on the text input box 814. In response to the operation, the electronic device 100 may display an input method input area 820 shown in FIG. 8B.

As shown in FIG. 8B, the input method input area 820 may include a virtual keyboard 821, an input method setting control 822, a voice input control 823, and a close control 824. The virtual keyboard 821 may be configured to receive text information entered by the user in the text input box 814. The input method setting control 822 may be configured to set different virtual keyboards. The voice input control 823 may be configured to trigger the electronic device 100 to convert a voice entered by the user into a text and input the text into the text input box 814. The change close control 824 may be configured to trigger the electronic device 100 to close the input method input area 820.

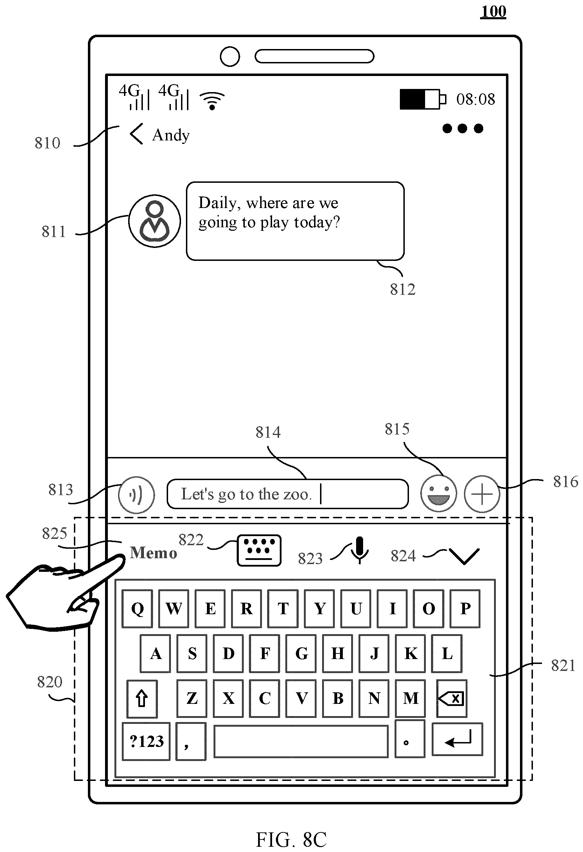

When the electronic device 100 enables the input method, and text information including an address name (for example, "Let's go to the zoo") is entered in the text input box 814, the electronic device 100 may check, from the reminder application such as a memo, whether there is memo information (for example, "Take a membership card when going to the zoo") associated with the address name. If there is the memo information, as shown in FIG. 8C, the electronic device 100 may trigger a reminder for the memo information, and a memo control 825 is displayed in the input method input area 820. The memo control 825 may be configured to trigger the electronic device 100 to display the memo information associated with the address name.

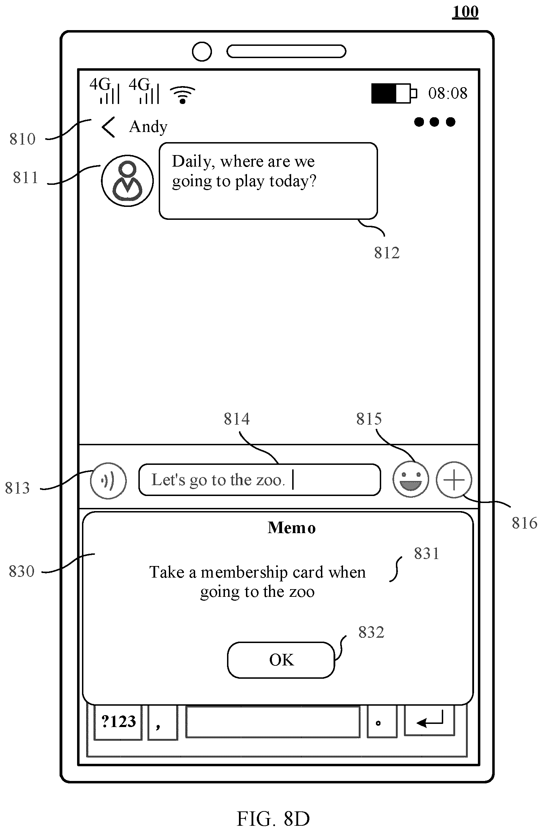

The electronic device 100 may receive an operation (for example, tap) performed by the user on the memo control 825. In response to the operation, the electronic device 100 may display a memo reminder box 830 shown in FIG. 8D.

As shown in FIG. 8D, the memo reminder box 830 includes memo information 831 (for example, "Take a membership card when going to the zoo") and a complete control 832. A text (for example, "OK") may be displayed on the complete control 832. The complete control 832 may be configured to trigger the electronic device 100 to close the memo reminder box 830.

In this embodiment of this application, the user is not limited to enabling the input method on the electronic device 100, and entering the address name in the input box on the chat interface. The user may further enter an address name in a search input box on a map application interface by enabling the input method on the electronic device 100. When the user enters the address name in the search input box on the map application interface, the electronic device 100 may display, in an input method input area, a memo control or memo information associated with the address name. The memo control may be configured to trigger the electronic device 100 to display the memo information associated with the address name.

In some embodiments, when the electronic device 100 receives a user input to search the map application for the address name, the electronic device 100 may receive reminder information that is associated with the address name and that is sent by the server of the map application, and the electronic device 100 may trigger a reminder for the reminder information on a specified occasion. The reminder information may be generated by the server according to data uploaded by another device. Optionally, the electronic device 100 may receive the user input. In response to the user input, the electronic device 100 may enable or disable receiving of the reminder information sent by the server.

For example, the address name may be "Shenzhen Safari Park". A baffle gate is installed at the entrance of Shenzhen Safari Park. The baffle gate may be connected to the server and upload visitors flowrate data to the server in real time. The server may generate, according to the visitors flowrate data uploaded by the baffle gate, reminder information associated with the address name "Shenzhen Safari Park" (for example, "Currently, Shenzhen Safari Park has a large number of visitors"). When the electronic device 100 receives the user input and searches the map application for "Shenzhen Safari Park", the electronic device 100 may send a reminder obtaining request to the server. The reminder obtaining request includes the address name (for example, "Shenzhen Safari Park"). The server may send, to the electronic device 100 in response to the reminder obtaining request, reminder information associated with the "Shenzhen Safari Park". The electronic device 100 may trigger the reminder for the reminder information on a specified occasion.

For another example, the address name may be "Shenzhen Safari Park". The server may obtain a quantity of mobile terminals in Shenzhen Wildlife Park from a base station of the Shenzhen Wildlife Park. The server may generate, according to the quantity of the mobile terminals in the Shenzhen Wildlife Park, the reminder information associated with the address name "Shenzhen Wildlife Park" (for example, "Currently, Shenzhen Wildlife Park has a large flow of visitors"). When the electronic device 100 receives the user input and searches the map application for "Shenzhen Safari Park", the electronic device 100 may send a reminder obtaining request to the server. The reminder obtaining request includes the address name (for example, "Shenzhen Safari Park"). The server may send, to the electronic device 100 in response to the reminder obtaining request, reminder information associated with the "Shenzhen Safari Park". The electronic device 100 may trigger the reminder for the reminder information on a specified occasion.

The specified occasion includes any one of the following: the electronic device 100 receives reminder information sent by the server; the electronic device 100 sets the address name as a navigation destination; the electronic device 100 uses the address name as a navigation destination and the electronic device 100 is connected to an in-vehicle Bluetooth device; the electronic device 100 uses the address name as a navigation destination and a moving speed of the electronic device 100 exceeds a specified speed value (for example, 30 km/h); the electronic device 100 detects that the electronic device 100 drives on a specific route (for example, a route to which the location of the address name belongs); and the like.

In some embodiments, the electronic device 100 may authorize another device, so that the electronic device 100 and the another device jointly edit memo information (for example, a note in a memo) in the memo application on the electronic device 100.

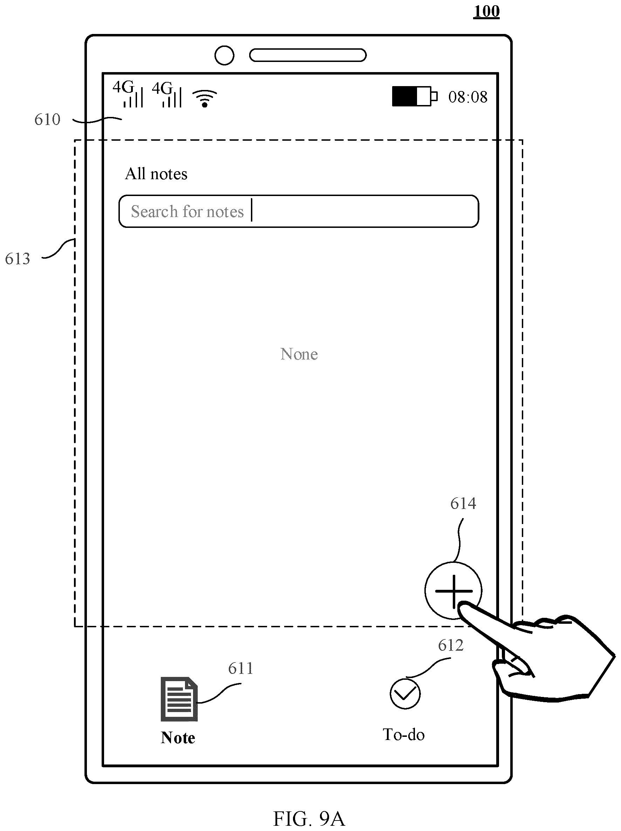

For example, as shown in FIG. 9A, the electronic device 100 may display the memo application interface 610. The memo application interface 610 includes the note control 611, the to-do control 612, and the note display area 613. For text descriptions of the memo application, refer to the embodiment shown in FIG. 6B. Details are not described herein again.

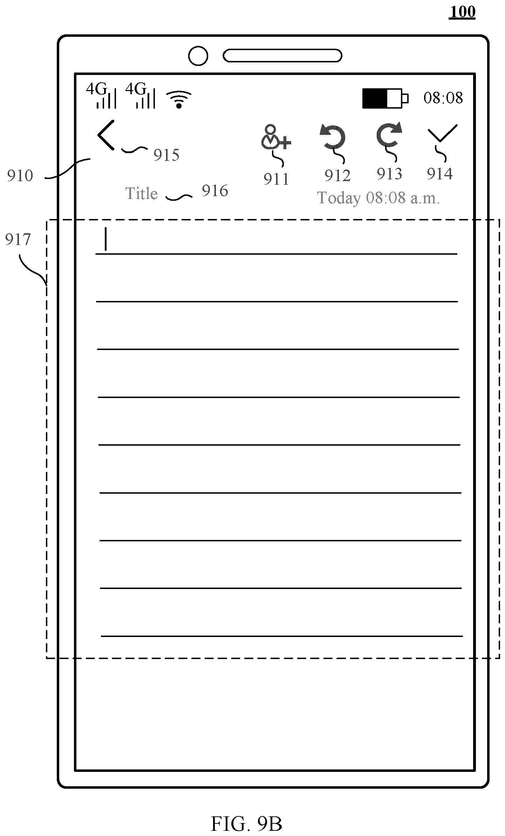

The electronic device 100 may receive an operation (for example, tap) performed by the user on the note adding control 614. In response to the operation, the electronic device 100 may display a note editing interface 910 shown in FIG. 9B.

As shown in FIG. 9B, the note editing interface 910 includes a collaborator adding control 911, an undo control 912, a restore control 913, a complete control 914, a return control 915, a title input area 916, a note input area 917, and the like. The collaborator adding control 911 may be configured to trigger the electronic device 100 to add another device to jointly edit note content. The undo control 912 may be configured to trigger content deleted by the user of the electronic device 100 in the note input area 917. The restore control 913 may be configured to trigger the electronic device 100 to restore a deletion operation of the user in the note input area 917. The complete control 914 may be configured to trigger the electronic device 100 to store note content entered by the user in the note input area 917. The return control 915 may be configured to trigger the electronic device 100 to return from the note editing interface 910, to display the memo application interface 610. The title input area 916 may be configured to receive a note title entered by the user. The note input area 917 may be configured to receive the note content entered by the user.

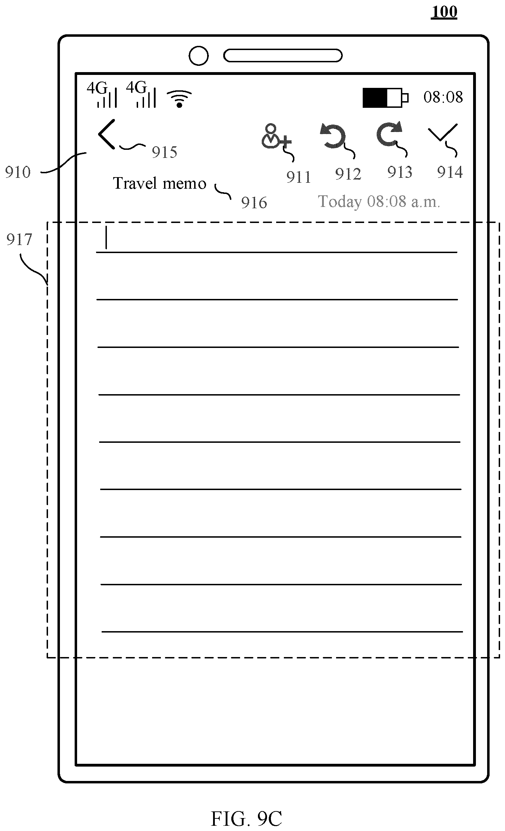

As shown in FIG. 9C, the electronic device 100 may receive a note title entered by the user in the note input area 916. For example, the note title that may be entered by the user may be "travel memo".

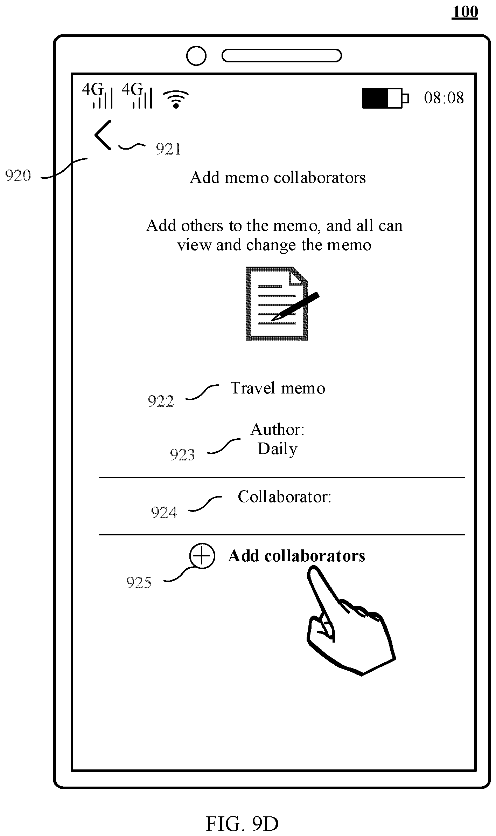

The electronic device 100 may receive an input operation (for example, tap) performed by the user on the collaborator adding control 911. In response to the operation, the electronic device 100 may display a collaborator adding interface 920 shown in FIG. 9D.

As shown in FIG. 9D, the collaborator adding interface 920 includes a return control 921, a note title 922 (for example, "travel memo"), a note author name 923 (for example, "Daily"), a collaborator display area 924, and a collaborator adding control 925. The return control 921 may be configured to trigger the electronic device 100 to return from the collaborator adding interface 920 to the note editing interface 920. The collaborator adding control 925 may be configured to trigger the electronic device 100 to send a collaborator invitation to another device.

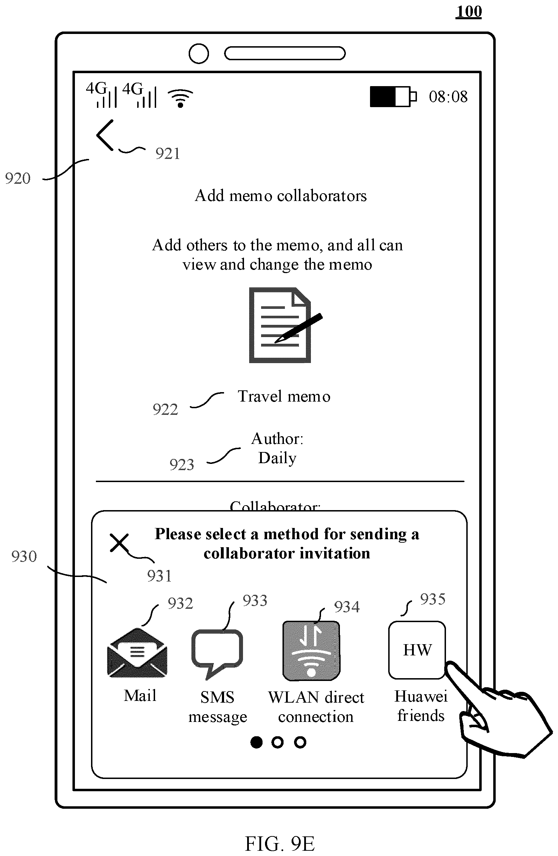

The electronic device 100 may receive an operation (for example, tap) performed by the user on the collaborator adding control 925. In response to the operation, the electronic device 100 may display a collaborator invitation page 930 shown in FIG. 9E.

As shown in FIG. 9E, the collaborator invitation page 930 includes a close control 931 and one or more invitation sending options (for example, an email application option 932, an information application option 933, a WLAN direct connection option 934, and a Huawei friends application option 935). The invitation sending option may be used to trigger the electronic device 100 to send the collaborator invitation to another device in a manner corresponding to the sending option.

The electronic device 100 may receive an operation (for example, tap) performed by the user on the Huawei friends application option 935. In response to the operation, the electronic device 100 may send a collaborator invitation to the collaborator device through a Huawei friends application. After receiving the collaborator invitation sent by the electronic device 100, the collaborator device may edit content in the note editing interface 910 shown in FIG. 9B.

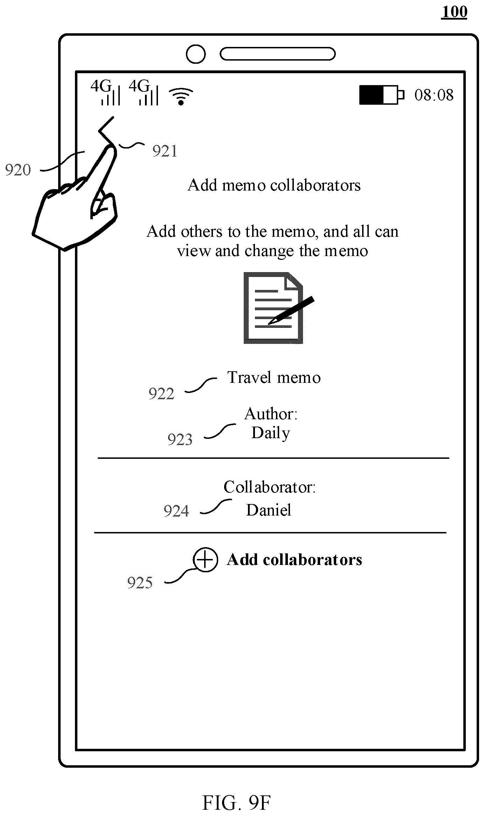

As shown in FIG. 9F, after the electronic device 100 successfully adds a collaborator, the electronic device 100 may display a name (for example, "Daniel") of the collaborator in the collaborator display area 924 on the collaborator adding interface 920.

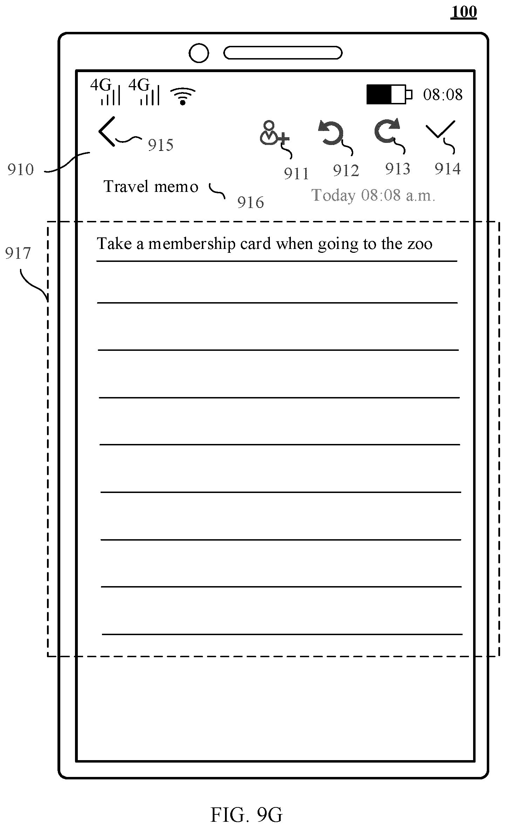

As shown in FIG. 9G, after the collaborator device completes editing of a note, the electronic device 100 may display, on the note editing interface 910, content edited by the collaborator device (for example, "Take a membership card when going to the zoo").

In some application scenarios, the electronic device 100 may receive a user input and add memo information to the reminder application such as a memo, without a need to set a reminder condition. The memo information may be used to record things that the user needs to do when going to a specified location in the future (for example, the memo information may be "Take a membership card when going to the zoo"). When the user enables a voice assistant and enters an address name by voice, the electronic device 100 may check, from the reminder application such as a memo, whether there is memo information associated with the address name. If there is the memo information associated with the address name, the electronic device 100 may trigger a reminder for the memo information. In this way, it can be implemented that the user only needs to record, in the reminder application such as a memo, a thing that needs to be done when the user goes to a specified location, so that the user can be reminded of the thing that needs to be done at an accurate moment. Therefore, user experience is improved.

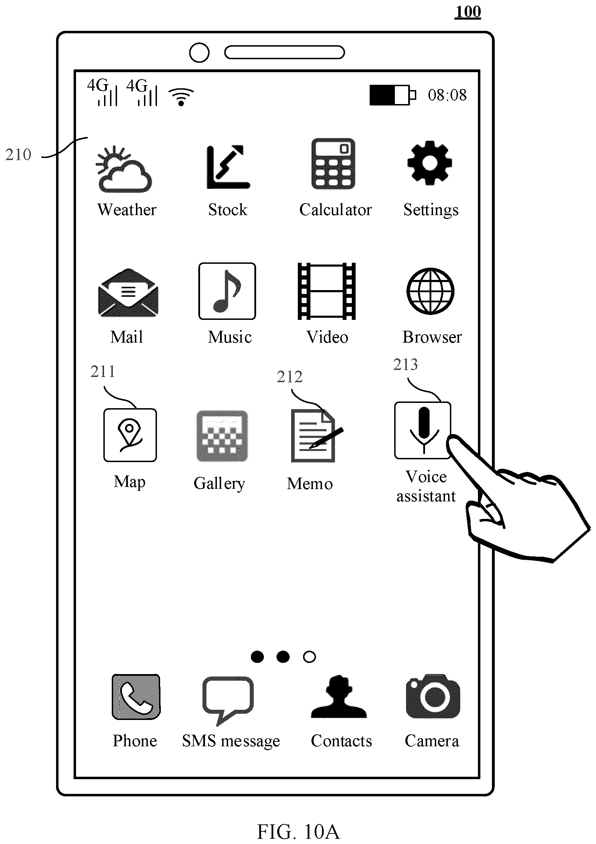

For example, as shown in FIG. 10A, the electronic device 100 may display the interface 210 with the home screen. For text descriptions of the interface 210, refer to the embodiment shown in FIG. 2A. Details are not described herein again.

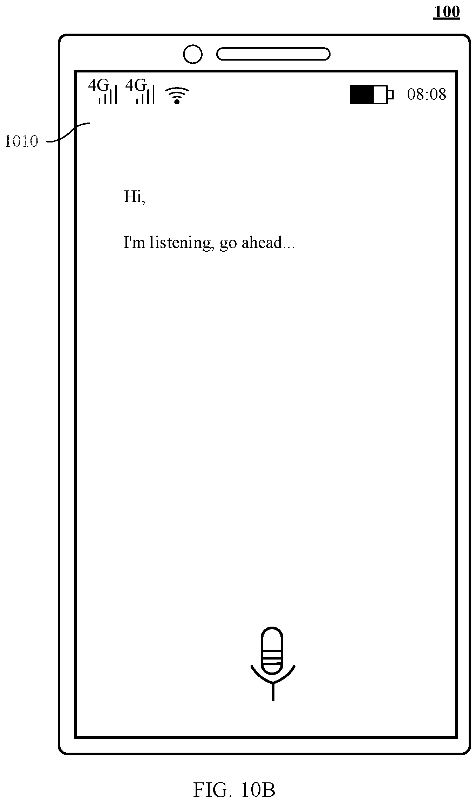

The electronic device 100 may receive an operation (for example, tap) performed by the user on the voice assistant application icon 213. In response to the operation, the electronic device 100 may display a voice assistant interface 1010 shown in FIG. 10B.

As shown in FIG. 10B, when displaying the voice assistant interface 1010, the electronic device 100 may turn on a microphone to receive a voice entered by the user, and recognize text information in the voice.

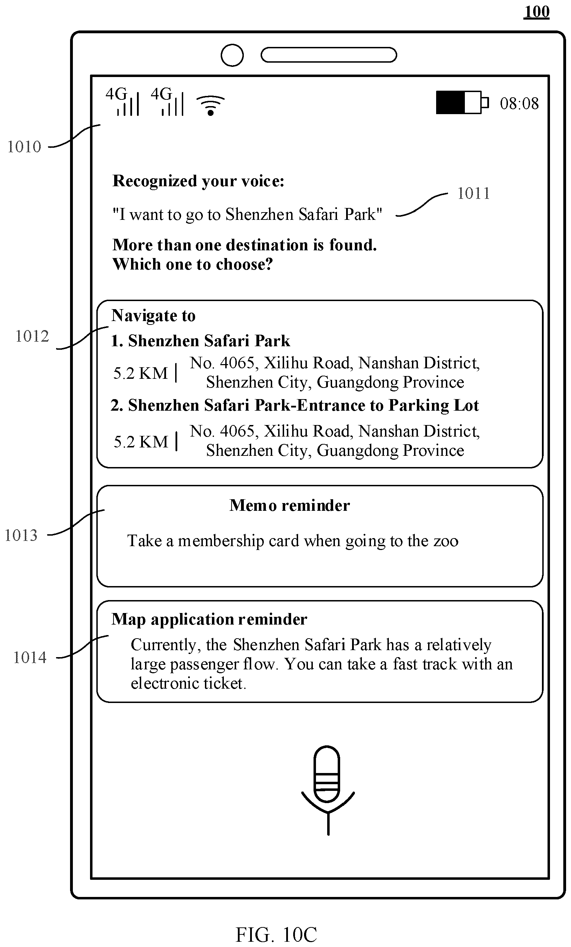

As shown in FIG. 10C, when the electronic device 100 recognizes that the voice (for example, "I want to go to Shenzhen Safari Park") entered by the user includes an address name (for example, Shenzhen Safari Park), the electronic device 100 may display location information 1012 of the address name on the voice assistant interface 1010. The location information 1012 may include a distance (for example, 5.2 km) from a location of the address name and an address of the address name (for example, "No. 4065, Xilihu Road, Nanshan District, Shenzhen City, Guangdong Province"). The electronic device 100 may check, from the reminder application such as a memo, whether there is memo information (for example, "Take a membership card when going to the zoo") associated with the address name. If there is the memo information, the electronic device 100 may trigger a reminder for the memo information, and display a reminder box 1013 on the voice assistant interface 1010. The reminder box 1013 includes the memo information (for example, 'Take a membership card when going to the zoo'). In a possible implementation, the electronic device 100 may further broadcast the memo information by voice. For example, voice content may be "You have a reminder related to the zoo, and content is 'Take a membership card when going to the zoo'".

In a possible implementation, when the electronic device 100 recognizes that a voice (for example, "I want to go to Shenzhen Safari Park") entered by the user includes an address name (for example, Shenzhen Safari Park), the electronic device 100 may further obtain, from the server by using a map application, reminder information associated with the address name, and trigger a reminder for the reminder information. For example, as shown in FIG. 10C, after obtaining, through the map application, reminder information that is sent by the server and that is associated with the address name, the electronic device 100 may display a reminder box 1014 on a voice assistant interface. The reminder box 1014 includes reminder information associated with the address name (for example, "Currently, the Shenzhen Safari Park has a relatively large passenger flow. You can take a fast track with an electronic ticket. ").

In some application scenarios, the electronic device 100 may obtain travel plan information of the user by using a ticket booking SMS message or a ticket booking application. The travel plan information includes travel time of the user, a vehicle, and a train number or a flight number of the vehicle. The electronic device 100 may check, at a specified time before the travel time or when leaving a preset location before the travel time, whether memo information (for example, bringing a charger when going to an airport) associated with an address (for example, an airport) of the vehicle exists in the reminder application such as a memo. If such information exists, the electronic device 100 may trigger a reminder for the memo information (for example, displaying the memo information on a display).

In a possible implementation, after obtaining the travel plan of the user, at a specified time before the travel time or when leaving a preset location before the travel time, the electronic device 100 accesses the Internet to check reminder information associated with the travel plan (for example, "Your current flight is Air China. A check-in counter at Shenzhen Airport is found for you"), and triggers a reminder associated with the travel reminder information.

In an application scenario, the electronic device 100 may receive a user input and add a commodity list to the reminder application such as a memo. After the electronic device 100 opens a shopping application, the electronic device 100 may trigger a reminder for the commodity list, for example, display the commodity list on a display. An occasion for the electronic device 100 to display the commodity list may include: the electronic device 100 searches for a commodity included in the commodity list, or the electronic device 100 receives an operation (for example, tap) performed by the user on the search input box.

In a possible implementation, after the electronic device 100 opens the shopping application and enables the input method, the electronic device 100 may check whether there is the commodity list in the reminder application such as a memo. If there is the commodity list, the electronic device 100 may display a commodity list control in the input method input area. The commodity list control may be configured to trigger the electronic device 100 to display the commodity list.

The following describes a procedure of this reminding method provided in this embodiment of this application.

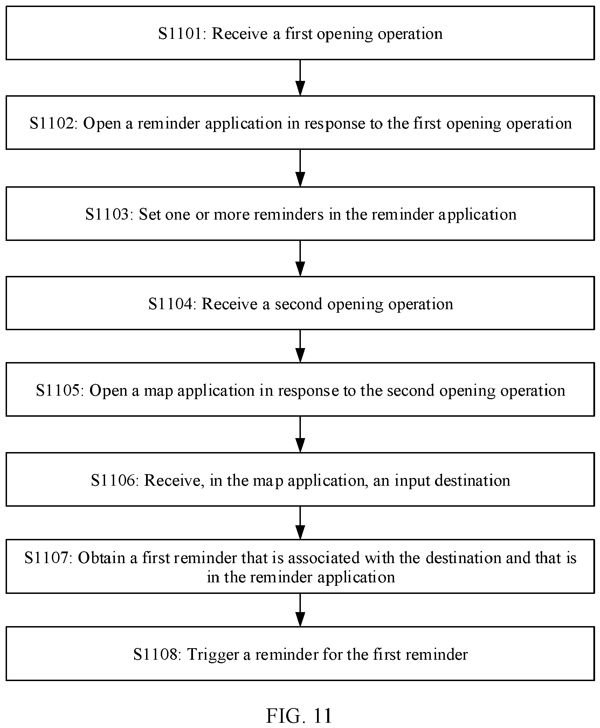

FIG. 11 is a schematic flowchart of the reminding method according to an embodiment of this application.

S1101: The electronic device 100 receives a first opening operation.

S1102: The electronic device 100 opens a reminder application in response to the first opening operation.

Specifically, the first opening operation is not limited to tap, double tap, touch and hold, voice instruction input, or the like. For example, the first opening operation may be an operation (for example, tap) on the memo application icon 212 in the embodiment shown in FIG. 6A.

For another example, the first opening operation may be an operation (for example, tap) on the memo control 234 shown in FIG. 2C. In response to the operation on the memo control 234, the electronic device 100 may open a memo interface of the memo application.

It should be noted that in this embodiment of this application, applications that record a to-do item and memo information may be collectively referred to as a reminder application, for example, a memo application and a note application in the Android operating system, and a reminder (Reminder) application in the IOS.

S1103: Set one or more reminders in the reminder application.

Specifically, the reminder may be the memo item in the foregoing embodiment or the memo information in the foregoing embodiment. The electronic device 100 may set a corresponding reminder condition for the memo item. For example, the one or more reminders may be the to-do item 261, the to-do item 271, and/or the to-do item 281 in FIG. 2H. For another example, the reminder may be the to-do item 633 in the embodiment shown in FIG. 6D. For another example, the reminder may be the note 721 in the embodiment shown in FIG. 7C, or the like. For specific content, refer to the foregoing embodiment. Details are not described herein again.

When the reminder is the memo information, the electronic device 100 may not need to set a reminder condition for the memo information. For example, in the embodiment shown in FIG. 7B, the electronic device 100 may only enter memo information in the note input area 716 on the note editing interface 710. The example is merely used to explain this application, and should not constitute a limitation. For specific content, refer to the foregoing embodiment. Details are not described herein again.

S1104: The electronic device 100 receives a second opening operation.

S 1105: The electronic device 100 opens a map application in response to the second opening operation.

The first opening operation is not limited to tap, double tap, touch and hold, voice instruction input, or the like. The map application may be the map application in the foregoing embodiment. For example, the second opening operation may be an operation (for example, tap) on the map application icon 211 in the embodiment shown in FIG. 2A. In response to the operation on the map application icon 211, the electronic device 100 may display the map application interface shown in FIG. 2B.

S 1106: Receive, in the map application, an input destination.

The electronic device 100 may receive the input destination (for example, "Shenzhen Safari Park") in the search input box 221 on the map application interface 220 shown in FIG. 4A. For specific content, refer to the foregoing embodiment. Details are not described herein again.

S1107: Obtain a first reminder that is associated with the destination and that is in the reminder application. The first reminder belongs to the foregoing one or more reminders.

In a possible implementation, the electronic device 100 may detect a keyword in the one or more reminders, and determine the first reminder from the one or more reminders based on the keyword in the one or more reminders. A keyword of the first reminder includes the destination.

In a possible implementation, the electronic device 100 may further set, in the reminder application, a reminder condition corresponding to the first reminder. The reminder condition includes the destination associated with the first reminder. The electronic device 100 obtains the reminder condition corresponding to the first reminder. Based on a reminder condition, the electronic device 100 obtains the first reminder that is associated with the destination and that is in the reminder application. The electronic device 100 triggers a reminder for the first reminder when the reminder condition is met.

For example, the electronic device 100 may intelligently analyze, by using AI, a keyword in the reminder condition entered by the user, for example, "Navigation", "Shenzhen", "Safari Park ", or "Destination". Then, the electronic device 100 may determine, from the keyword, that the reminder condition is "Shenzhen Safari Park is set as a navigation destination next time", and associate the destination "Shenzhen Safari Park" with the reminder "Take a membership card".

S1108: Trigger a reminder for the first reminder.

In some embodiments, an occasion for triggering a reminder for the first reminder may include but is not limited to the following several policies:
1. Receive, in a search input box of the map application, the input destination. Trigger the reminder for the first reminder in response to receiving, in the search input box of the map application, the input destination.

For specific content, refer to the embodiment shown in FIG. 4A or FIG. 5A. Details are not described herein again.

2. Receive a search operation after an input destination is received in the map application. Display location information of the destination in response to the search operation. Trigger the reminder for the first reminder in response to the search operation.

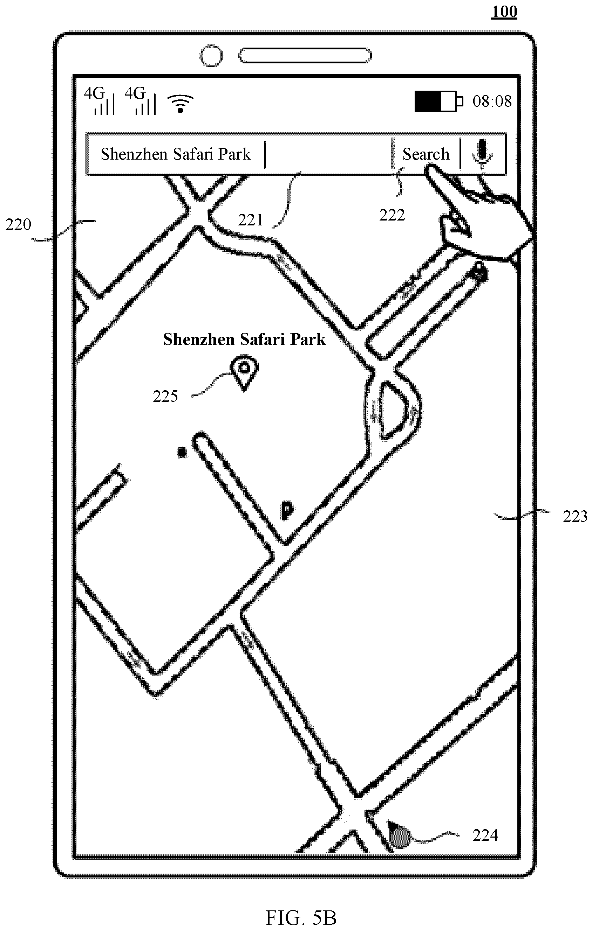

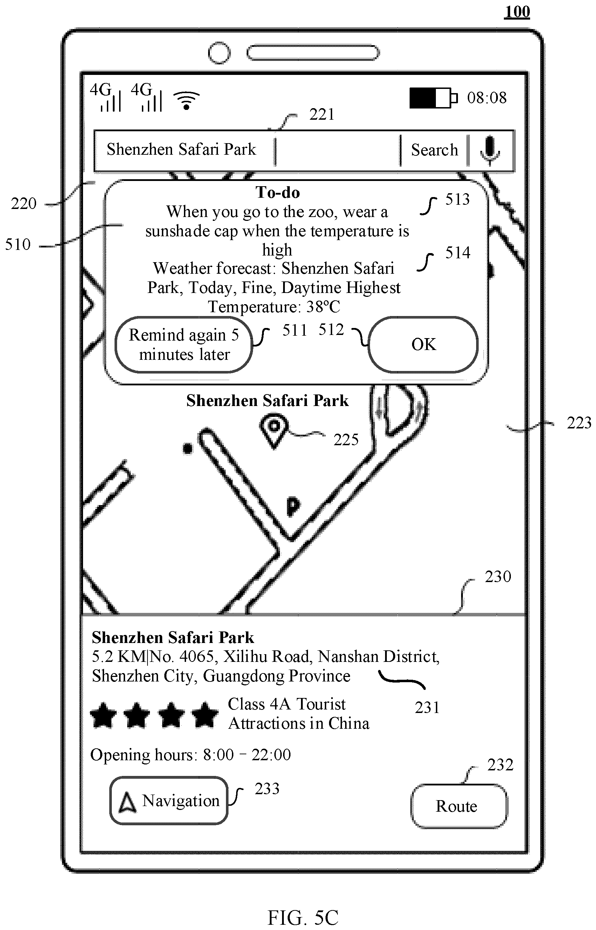

The search operation may be an operation (for example, tap) on the search control 222 in the embodiment shown in FIG. 4B or FIG. 5B. For specific content, refer to the embodiment shown in FIG. 4B and FIG. 4C or the embodiment shown in FIG. 5B and FIG. 5C. Details are not described herein again.

3. Receive a navigation operation after an input destination is received in the map application. In response to the navigation operation, set the destination as a navigation end point and enable navigation. Trigger the reminder for the first reminder in response to the navigation operation.

The navigation operation may be an operation (for example, tap) on the navigation control 233 in the embodiment shown in FIG. 3A. For specific content, refer to the embodiment shown in FIG. 3A to FIG. 3B. Details are not described herein again.

In some embodiments, the reminder type of the first reminder may include but is not limited to the following several policies:
1. Display a first memo control. Receive a first input for the first memo control. Display the first reminder.

For the first memo control, refer to the memo control 234 in the embodiment shown in FIG. 2I. For specific content, refer to the embodiment shown in FIG. 2I. Details are not described herein again.

2. Display a reminder box, where the reminder box includes the first reminder.

For the reminder box, refer to the to-do item reminder box 320 in the embodiment shown in FIG. 3B and FIG. 3C, the to-do item reminder box 410 in the embodiment shown in FIG. 4A and FIG. 4C, the to-do item reminder box 510 in the embodiment shown in FIG. 5A and FIG. 5C, the memo reminder box 730 in the embodiment shown in FIG. 7D, or the like. For specific content, refer to the foregoing embodiment. Details are not described herein again.

3. Receive a second input for the search input box before an input destination is received in the map application. In response to the second input, start an input method application and display an input method input area. Display a second memo control in the input method input area in response to receiving, in the search input box of the map application, the input destination. Receive a third input for the second memo control. Display the first reminder in response to the third input.

For the second memo control, refer to the memo control 825 shown in FIG. 8C. For specific content, refer to the foregoing embodiment. Details are not described herein again.

4. Establish a Bluetooth connection to an in-vehicle infotainment device before the reminder for the first reminder is triggered. After the first reminder that is associated with the destination and that is in the reminder application is obtained, send a reminder request and the first reminder to the in-vehicle infotainment device, where the reminder request is used to request the in-vehicle infotainment device to output the first reminder.

According to this application, when it is detected that the user is about to a location corresponding to an address name at a future time point, the electronic device may check memo information/a to-do item that is associated with the address name and that is in a reminder application such as a memo application, and remind the user of the memo information/the to-do item associated with the address name. In this way, when the user needs to go to the location in the future, the memo information/the to-do item associated with the location may be output to the user. The electronic device may accurately grasp a reminder occasion for the memo information/the to-do item.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A reminding method, comprising:
receiving a first opening operation;
opening a reminder application in response to the first opening operation;
setting one or more reminders in the reminder application;
receiving a second opening operation;
opening a map application in response to the second opening operation;
receiving, in the map application, an input destination;
obtaining a first reminder that is associated with the destination and that is in the reminder application, wherein the first reminder belongs to the one or more reminders; and
triggering a reminder for the first reminder.

2. The method according to claim 1, wherein the receiving, in the map application, an input destination specifically comprises:
receiving, in a search input box of the map application, the input destination; and
the triggering a reminder for the first reminder specifically comprises:
triggering the reminder for the first reminder in response to receiving, in the search input box of the map application, the input destination.

3. The method according to claim 1, wherein after the receiving, in the map application, an input destination, the method further comprises:
receiving a search operation; and
displaying location information of the destination in response to the search operation; and
the triggering a reminder for the first reminder specifically comprises:
triggering the reminder for the first reminder in response to the search operation.

4. The method according to claim 1, wherein after the receiving, in the map application, an input destination, the method further comprises:
receiving a navigation operation; and
in response to the navigation operation, setting the destination as a navigation end point and starting navigation; and
the triggering a reminder for the first reminder specifically comprises:
triggering the reminder for the first reminder in response to the navigation operation.

5. The method according to any one of claims 1 to 4, wherein the triggering a reminder for the first reminder specifically comprises:
displaying a first memo control; and
receiving a first input for the first memo control, and displaying the first reminder.

6. The method according to any one of claims 1 to 4, wherein the triggering a reminder for the first reminder specifically comprises:
displaying a reminder box, wherein the reminder box comprises the first reminder.

7. The method according to claim 2, wherein before the receiving, in the map application, an input destination, the method further comprises:
receiving a second input for the search input box; and
in response to the second input, starting an input method application and displaying an input method input area; and
when an address name of the destination is displayed in the search input box of the map application, the triggering a reminder for the first reminder specifically comprises:
displaying a second memo control in the input method input area in response to receiving, in the search input box of the map application, the input destination;
receiving a third input for the second memo control; and
displaying the first reminder in response to the third input.

8. The method according to any one of claims 1 to 4, wherein before the triggering a reminder for the first reminder, the method further comprises:
establishing a Bluetooth connection to an in-vehicle infotainment device; and
the triggering a reminder for the first reminder specifically comprises:
sending a reminder request and the first reminder to the in-vehicle infotainment device, wherein the reminder request is used to request the in-vehicle infotainment device to output the first reminder.

9. The method according to claim 1, wherein the method further comprises:
setting, in the reminder application, a reminder condition corresponding to the first reminder, wherein the reminder condition comprises the destination associated with the first reminder; and
obtaining the reminder condition corresponding to the first reminder; and
the obtaining a first reminder that is associated with the destination and that is in the reminder application specifically comprises:
obtaining, based on the reminder condition, the first reminder that is associated with the destination and that is in the reminder application.

10. The method according to claim 9, wherein the triggering a reminder for the first reminder specifically comprises:
triggering the reminder for the first reminder when the reminder condition is met.

11. The method according to claim 1, wherein the obtaining a first reminder that is associated with the destination and that is in the reminder application specifically comprises:
detecting a keyword in the one or more reminders; and
determining the first reminder from the one or more reminders based on the keyword in the one or more reminders, wherein a keyword of the first reminder comprises the destination.

12. An electronic device, comprising one or more processors, a display, andone or more memories, wherein the display and the one or more memories are coupled to the one or more processors, the one or more memories are configured to store computer program code, the computer program code comprises computer instructions, and when the one or more processors execute the computer instructions, the electronic device is enabled to:
receive a first opening operation;
open a reminder application in response to the first opening operation;
set one or more reminders in the reminder application;
receive a second opening operation;
open a map application in response to the second opening operation;
receive, in the map application, an input destination;
obtain a first reminder that is associated with the destination and that is in the reminder application, wherein the first reminder belongs to the one or more reminders; and
trigger a reminder for the first reminder.

13. The electronic device according to claim 12, wherein that the electronic device receives, in the map application, the input destination specifically comprises:
receiving, in a search input box of the map application, the input destination; and
that the electronic device triggers the reminder for the first reminder specifically comprises:
triggering the reminder for the first reminder in response to receiving, in a search input box of the map application, the input destination.

14. The electronic device according to claim 12, wherein after the electronic device receives, in the map application, the input destination, the one or more processors are further configured to invoke the computer instructions, so that the electronic device is enabled to:
receive a search operation; and
display location information of the destination in response to the search operation; and
that the electronic device triggers the reminder for the first reminder specifically comprises:
triggering the reminder for the first reminder in response to the search operation.

15. The electronic device according to claim 12, wherein after the electronic device receives, in the map application, the input destination, the one or more processors are further configured to invoke the computer instructions, so that the electronic device is enabled to:
receive a navigation operation; and
in response to the navigation operation, set the destination as a navigation end point and enable navigation; and
that the electronic device triggers the reminder for the first reminder specifically comprises:
triggering the reminder for the first reminder in response to the navigation operation.

16. The electronic device according to any one of claims 12 to 15, wherein that the electronic device triggers the reminder for the first reminder specifically comprises:
displaying a first memo control; and
receiving a first input for the first memo control, and displaying the first reminder.

17. The electronic device according to any one of claims 12 to 15, wherein that the electronic device triggers the reminder for the first reminder specifically comprises:
displaying a reminder box, wherein the reminder box comprises the first reminder.

18. The electronic device according to claim 12, wherein the one or more processors are further configured to invoke the computer instructions, so that the electronic device is enabled to:
receive a second input for the search input box; and
in response to the second input, start an input method application and display an input method input area; and
when an address name of the destination is displayed in the search input box of the map application, that the electronic device triggers the reminder for the first reminder specifically comprises:
displaying a second memo control in the input method input area in response to receiving, in the search input box of the map application, the input destination;
receiving a third input for the second memo control; and
displaying the first reminder in response to the third input.

19. The electronic device according to any one of claims 12 to 15, wherein the one or more processors are further configured to invoke the computer instructions, so that the electronic device is enabled to:
establish a Bluetooth connection to an in-vehicle infotainment device; and
that the electronic device triggers the reminder for the first reminder specifically comprises:
sending a reminder request and the first reminder to the in-vehicle infotainment device, wherein the reminder request is used to request the in-vehicle infotainment device to output the first reminder.

20. The electronic device according to claim 12, wherein the one or more processors are further configured to invoke the computer instructions, so that the electronic device is enabled to:
set, in the reminder application, a reminder condition corresponding to the first reminder, wherein the reminder condition comprises the destination associated with the first reminder; and
obtain the reminder condition corresponding to the first reminder; and
that the electronic device obtains the first reminder that is associated with the destination and that is in the reminder application specifically comprises:
obtaining, based on the reminder condition, the first reminder that is associated with the destination and that is in the reminder application.

21. The electronic device according to claim 20, wherein that the electronic device triggers the reminder for the first reminder specifically comprises:
triggering the reminder for the first reminder when the reminder condition is met.

22. The electronic device according to claim 12, wherein that the electronic device obtains the first reminder that is associated with the destination and that is in the reminder application specifically comprises:
detecting a keyword in the one or more reminders; and
determining the first reminder from the one or more reminders based on the keyword in the one or more reminders, wherein a keyword of the first reminder comprises the destination.

23. A computer-readable storage medium, comprising instructions, wherein when the instructions are run on an electronic device, the electronic device is enabled to perform the method according to any one of claims 1 to 11.
